# EUROPEAN PATENT APPLICATION

(11) **EP 4 011 983 A1**
(43) Date of publication of application: **15.06.2022**
(21) Application number: 20849424.5
(22) Date of filing: 31.07.2020
(51) Int. Cl.: C09B 47/00, G02C 7/04, G02C 7/10, C08K 5/3415, C08L 101/00, G02B 5/22

(54) **OPTICAL MATERIAL**

(30) Priority: 06.08.2019 JP 2019144875
(71) Applicant: Mitsui Chemicals, Inc., Tokyo 105-7122 (JP)
(72) Inventor: KAWATO, Nobuo, Omuta-shi, Fukuoka 836-8610 (JP); TAKENAKA, Manami, Omuta-shi, Fukuoka 836-8610 (JP)
(74) Representative: Mewburn Ellis LLP
(86) International application number: PCT/JP2020/029564
(87) International publication number: WO 2021/024962

(57) **Abstract**

An optical material for which the following (1) to (3) are satisfied by a transmittance curve in a case in which the optical material is measured at a thickness of 2 mm, and for which a^{∗} is from -4 to 1 and b^{∗} is from -1 to 11 as a hue in a CIE 1976 (L^{∗}, a^{∗}, b^{∗}) color space: (1) the transmittance curve has a maximum value T1 of transmittance at a wavelength of from 400 nm to 445 nm, and the maximum value T1 is 65% or more; (2) the transmittance curve has a minimum value T2 of transmittance at a wavelength of from 445 nm to 485 m, and the minimum value T2 is from 60% to 90%; and(3) a minimum value of transmittance at a wavelength of from 650 nm to 800 nm is 75% or more, and an average value of transmittance at a wavelength of from 650 nm to 800 nm is 80% or more.

## Description

### Technical Field

The present disclosure relates to an optical material.

### Background Art

An optical material containing a resin and an organic dye has been widely known.

Various kinds, contents, and the like of the resin and the organic dye are known.

For example, Patent Document 1 discloses an optical material containing polythiourethane and from 5 to 100 ppm of two or more organic dyes selected from porphyrin-based compounds represented by the following Formula A, wherein the optical material measured at a thickness of 2 mm satisfies specific characteristics.

Patent Document 1: Japanese Patent No. 6216383

### SUMMARY OF INVENTION

### Problem to be Solved by the Invention

Light emitted by a display of a digital device (for example, light having a wavelength in the vicinity of 460 nm) is suggested as being a cause of asthenopia or the like, and is considered to be light that is undesirable with respect to the human body.

The present inventors considered that it is important to shield undesirable light from the human body.

On the other hand, if undesirable light is shielded too much from the human body by an optical material such as sunglasses, it is assumed that visibility with respect to surroundings is also lowered. As a result, for example, it is considered that a possibility of causing a disadvantage such as causing a hindrance in daily life, such as when driving a vehicle, increases.

Further, in a case in which an optical material is used, the above-described problems are required to be solved while maintaining a favorable hue.

In the optical material described in Patent Document 1, the hue and visibility of the optical material are not considered.

A problem to be solved by one embodiment of the present disclosure is to provide an optical material that is excellent in visibility, hue in a CIE 1976 (L^{∗}, a^{∗}, b^{∗}) color space, and shielding against light of from 445 nm to 485 nm.

### Means for Solving the Problem

The means for solving the problem include the following aspects.
<1> An optical material for which the following (1) to (3) are satisfied by a transmittance curve in a case in which the optical material is measured at a thickness of 2 mm, and for which a^{∗} is from -4 to 1 and b^{∗} is from -1 to 11 as a hue in a CIE 1976 (L^{∗}, a^{∗}, b^{∗}) color space:
   (1) the transmittance curve has a maximum value T1 of transmittance at a wavelength of from 400 nm to 445 nm, and the maximum value T1 is 65% or more;
   (2) the transmittance curve has a minimum value T2 of transmittance at a wavelength of from 445 nm to 485 m, and the minimum value T2 is from 60% to 90%; and
   (3) a minimum value of transmittance at a wavelength of from 650 nm to 800 nm is 75% or more, and an average value of transmittance at a wavelength of from 650 nm to 800 nm is 80% or more.
<2> The optical material described in <1>, wherein a yellowness is from -2 to 13.
<3> The optical material described in <1> or <2>, wherein luminous transmittance is 75% or more.
<4> The optical material described in any one of <1> to <3>, containing a resin material and an organic dye that includes at least one porphyrin-based compound represented by the following Formula A. 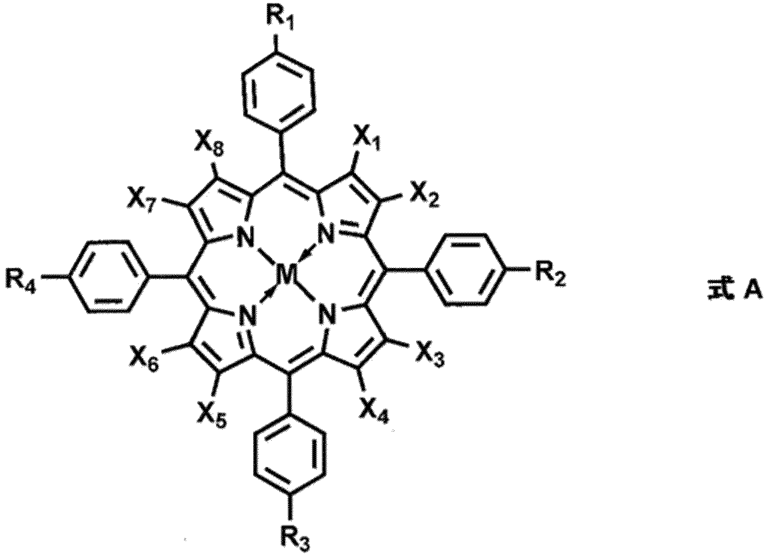 Wherein, in Formula A, each of X₁ to X₈ independently represents a hydrogen atom or a halogen atom, at least one of X₁ to X₈ being a halogen atom, each of R₁ to R₄ independently represents a hydrogen atom or a straight chain or branched alkyl group, and M represents two hydrogen atoms, a divalent metal atom, a trivalent substituted metal atom, a tetravalent substituted metal atom, a hydroxylated metal atom or an oxidized metal atom.
<5> The optical material described in <4>, wherein a content of the organic dye is from 1 ppm to 6 ppm.
<6> The optical material described in <4> or <5>, wherein a content of the organic dye is from 1 ppm to 4 ppm.
<7> The optical material described in any one of <4> to <6>, wherein:
   the organic dye contains an organic dye *a* which is a porphyrin-based compound represented by Formula A, and an organic dye b which is a porphyrin-based compound represented by Formula A; and
   in an absorption spectrum in a case in which the optical material is measured at an optical path length of 10 mm using a chloroform solution having a concentration of 0.01 g/L, the organic dye *a* has an absorption peak at from 445 nm to 455 nm, and the organic dye *b* has an absorption peak at from 460 nm to 470 nm.
<8> The optical material described in <7>, wherein a ratio of a content of the organic dye *b* to a content of the organic dye *a* is from 0.5 to 2.
<9> The optical material described in any one of <1> to <8>, wherein the transmittance curve has the minimum value T2 at a wavelength of from 455 nm to 465 m.
<10> The optical material described in any one of <1> to <9>, wherein the following (4) is satisfied by the transmittance curve:
   (4) the transmittance curve has a minimum value T4 of transmittance at a wavelength of from 540 nm to 620 nm, and the minimum value T4 is 65% or more.
<11> The optical material described in any one of <1> to <10>, wherein:
   the following (4) is satisfied by the transmittance curve:
   (4) the transmittance curve has a minimum value T4 of transmittance at a wavelength of from 540 nm to 620 nm, and the minimum value T4 is 65% or more; and the maximum value T1, the minimum value T4, and the minimum value T2 satisfy the maximum value T1>the minimum value T4>the minimum value T2.
<12> The optical material described in any one of <1> to <11>, wherein the following (5) is satisfied by the transmittance curve:
   (5) the transmittance curve has a maximum value T5 of transmittance at a wavelength of from 485 nm to 540 nm, and the maximum value T5 is 70% or more.
<13> The optical material described in any one of <1> to <12>, wherein:
   the following (4) and (5) are satisfied by the transmittance curve:
   (4) the transmittance curve has a minimum value T4 of transmittance at a wavelength of from 540 nm to 620 nm, and the minimum value T4 is 65% or more;
   (5) the transmittance curve has a maximum value T5 of transmittance at a wavelength of from 485 nm to 540 nm, and the maximum value T5 is 70% or more; and the maximum value T5, the minimum value T4, and the minimum value T2 satisfy the maximum value T5>the minimum value T4>the minimum value T2.

### Effect of the Invention

According to one embodiment of the present disclosure, an optical material that is excellent in visibility, hue in a CIE 1976 (L^{∗}, a^{∗}, b^{∗}) color space, and shielding against light of from 445 nm to 485 nm can be provided.

### BRIEF DESCRIPTION OF DRAWINGS

Fig. 1 is a graph showing transmittance curves in the optical materials of Example 1 and Example 2.
Fig. 2 is a graph showing transmittance curves in the optical materials of Example 3 to Example 5 and Comparative Example 3.
Fig. 3 is a graph showing transmittance curves in the optical materials of Comparative Example 1 and Comparative Example 2.

### DESCRIPTION OF EMBODIMENTS

Hereinafter, the content of the present disclosure will be described in detail.

Although explanation of the constituent elements described below may be based on representative embodiments of the present disclosure, the present disclosure is not limited to such embodiments.

In the present disclosure, the expression "(from) ... to ... ", which indicates a numerical range, is used to mean that the numerical values before and after the word "to" are included as the lower limit value and the upper limit value.

In the numerical ranges described in a stepwise manner in the present disclosure, the upper limit value or the lower limit value described in one numerical range may be replaced with the upper limit value or the lower limit value of another numerical range described in a stepwise manner. Further, in the numerical ranges described in the present disclosure, the upper limit value or the lower limit value of the numerical ranges may be replaced with the values shown in the Examples.

In the present disclosure, compounds for which substitution or unsubstitution is not specified may have an optional substituent as long as the effects in the present disclosure are not impaired.

In the present disclosure, an amount of each component in a composition means the total amount of plural substances present in the composition unless otherwise particularly specified, in a case in which plural substances corresponding to each component are present in a layer.

In the present disclosure, the combination of preferred embodiments is a more preferred embodiment.

### << Optical Material >>

The optical material of the present disclosure satisfies the following (1) to (3) in a transmittance curve in a case in which the optical material is measured at a thickness of 2 mm, and has a^{∗} of from -4 to 1 and b^{∗} of from -1 to 11 as a hue in the CIE 1976 (L^{∗}, a^{∗}, b^{∗}) color space.
(1) The transmittance curve has a maximum value T1 of transmittance at a wavelength of from 400 nm to 445 nm, and the maximum value T1 is 65% or more.
(2) The transmittance curve has a minimum value T2 of transmittance at a wavelength of from 445 nm to 485 m, and the minimum value T is from 60% to 90%.
(3) A minimum value of transmittance at a wavelength of from 650 nm to 800 nm is 75% or more, and an average value of transmittance at a wavelength of from 650 nm to 800 nm is 80% or more.

In the optical material of the present disclosure, in the transmittance curve, the minimum value T2 in above-described (2) is 90% or less, the maximum value T1 and the minimum value T2 described in above-described (1) and above-described (2) are specific values or more, and transmittance at a wavelength of from 650 nm to 800 nm satisfies above-described (3), such that an optical material excellent in visibility and hue in the CIE 1976 (L^{∗}, a^{∗}, b^{∗}) color space, while favorably shielding against light having a wavelength of from 445 nm to 485 m, can be obtained.

Further, it is considered that the eye being irradiated with light having a specific wavelength (for example, 460 nm or 480 nm) is one of the causes of inducing asthenopia or the like, and therefore, it is considered that the optical material of the present disclosure contributes to suppressing asthenopia or the like by having a minimum value T2 of transmittance at a wavelength of from 445 nm to 485 m and the minimum T2 being from 60% to 90%.

### < Transmittance Curve >

The transmittance curve in the present disclosure satisfies above-described (1) to (3). Therefore, visibility and shielding against light of from 445 nm to 485 nm are excellent.

From the above viewpoint, in above-described (1), the maximum value T1 is preferably 70% or more, and more preferably the maximum value T1 is 80% or more.

Further, the upper limit of the maximum value T1 is not particularly limited, and for example, the maximum value T1 may be 95% or less, or may be 90% or less.

In above-described (2), the minimum value T2 is preferably 65% or more, and more preferably the minimum value T2 is 70% or more, from the viewpoint of excellent visibility.

Further, from the viewpoint of excellent shielding against light of from 445 nm to 485 nm, the minimum value T2 is preferably 80% or less, and more preferably the minimum value T2 is 75% or less.

In an optical material of the present disclosure, from the above viewpoint, the transmittance curve preferably has the minimum value T2 at a wavelength of from 450 nm to 475 m, and more preferably has the minimum value T2 at a wavelength of from 455 nm to 465 nm.

On the retina of mammals, there are three cone cells, that is, an S cone cells, an M cone cells and an L cone cells, a rod cells, and an intrinsically photosensitive retinal ganglion cell (ipRGC), which is a photoreceptor newly discovered in recent years. Each of these has a sensitivity peak at a light of wavelength of 420 nm (S cone cell), 530 nm (M cone cell), 560 nm (L cone cell), 500 nm (rod cell), and 480 nm (ipRGC).

For example, since ipRGC strongly reacts to blue component light at a wavelength of approximately 480 nm, it is considered that an effect of preventing and reducing asthenopia or the like of a user can be obtained by using eyewear such as eyeglasses or sunglasses which include an optical material having a low transmittance of blue component light in the wavelength range of above-described (2), as in the optical material of the present disclosure.

From the above viewpoint, in above-described (3), a minimum value of transmittance at a wavelength of from 650 nm to 800 nm is more preferably 80% or more. Further, a minimum value of transmittance at a wavelength of from 650 nm to 800 nm may be 90% or less, or may be 85% or less.

In above-described (3), an average value of transmittance at a wavelength of from 650 nm to 800 nm is preferably 85% or more. Further, an average value of transmittances at a wavelength of from 650 nm to 800 nm may be 99% or less.

From the same viewpoint as above, in above-described (3), it is preferable that "transmittance at a wavelength of from 650 nm to 800 nm" is "transmittance at a wavelength of from 700 nm to 800 nm".

That is, in above-described (3), it is preferable that a minimum value of transmittance at a wavelength of from 700 nm to 800 nm is 75% or more, and that an average value of transmittance at a wavelength of from 700 nm to 800 nm is 80% or more.

Further, the preferable ranges of the minimum value of transmittance at a wavelength of from 700 nm to 800 nm and the average value of transmittance at a wavelength of from 700 nm to 800 nm are the same as the preferable ranges of the minimum value of transmittance at a wavelength of from 700 nm to 800 nm and the average value of transmittance at a wavelength of from 700 nm to 800 nm described above.

In the optical material of the present disclosure, in the transmittance curve, further:
(4) it is preferable that the transmittance curve has a minimum value T4 of transmittance at a wavelength of from 540 nm to 620 nm, and the minimum value T4 is 65% or more.

In the optical material of the present disclosure, in a case in which above-described (4) is satisfied, an optical material excellent in visibility and hue in the CIE 1976 (L^{∗}, a^{∗}, b^{∗}) color space, while favorably shielding against light having a wavelength of from 445 nm to 485 m, can be obtained.

Further, in the optical material of the present disclosure, the effect of reducing glare and the effect of improving color contrast can be obtained by satisfying above-described (4).

In the optical material of the present disclosure, in the transmittance curve, further:
(5) it is preferable that the transmittance curve has a maximum value T5 of transmittance at a wavelength of from 485 nm to 540 nm, and the maximum value T5 is 70% or more.

In the optical material of the present disclosure, in a case in which above-described (5) is satisfied, an optical material excellent in visibility and hue in the CIE 1976 (L^{∗}, a^{∗}, b^{∗}) color space, while favorably shielding against light having a wavelength of from 445 nm to 485 m, can be obtained.

Further, in the optical material of the present disclosure, in the transmittance curve, it is preferable that both of the following (4) and (5) are satisfied. That is, it is preferable that the optical material of the present disclosure satisfies the following (1) to (5) in a transmittance curve in a case in which the optical material is measured at a thickness of 2 mm (hereinafter, also simply referred to as transmittance polarity), and has a^{∗} of from -4 to 1 and b^{∗} of from -1 to 11 as a hue in the CIE 1976 (L^{∗}, a^{∗}, b^{∗}) color space.
(1) The transmittance curve has a maximum value T1 of transmittance at a wavelength of from 400 nm to 445 nm, and the maximum value T1 is 65% or more.
(2) The transmittance curve has a minimum value T2 of transmittance at a wavelength of from 445 nm to 485 m, and the minimum value T2 is from 60% to 90%.
(3) A minimum value of transmittance at a wavelength of from 650 nm to 800 nm is 75% or more, and the average value of transmittance at a wavelength of from 650 nm to 800 nm is 80% or more.
(4) The transmittance curve has a minimum value T4 of transmittance at a wavelength of from 540 nm to 620 nm, and the minimum value T4 is 65% or more.
(5) The transmittance curve has a maximum value T5 of transmittance at a wavelength of from 485 nm to 540 nm, and the maximum value T5 is 70% or more.

In the optical material of the present disclosure, in addition to satisfying above-described (1) to (3) in the transmittance curve, by the minimum value T4 and the maximum value T5 in above-described (4) and above-described (5) being specific values or more, an optical material excellent in visibility and hue in the CIE 1976 (L^{∗}, a^{∗}, b^{∗}) color space, while favorably shielding against light having a wavelength of from 445 nm to 485 m, can be obtained.

As described above, three cone cells, that is, an S cone cell, an M cone cell and an L cone cell, a rod cell, and an ipRGC are present in the retina of animals.

With regard to above-described (4), the L cone cell, which acts in bright places, has a sensitivity peak at a wavelength of 560 nm.

Therefore, by using eyewear or the like including an optical material in which the minimum value of transmittance in the wavelength range of above-described (4) is higher than the minimum value of transmittance in the wavelength range of above-described (2), as in the optical material in the preferred embodiment of the present disclosure, it is considered that an effect of preventing and reducing asthenopia can be obtained without significantly impairing brightness or visibility.

In above-described (5), the rod cell has a sensitivity peak at a wavelength of 500 nm, and the M cone cell has a sensitivity peak at a wavelength of 530 nm.

Further, the rod cell has a characteristic of acting mainly in the dark, and the cone cells have a characteristic of acting mainly in bright places.

Therefore, by using eyewear or the like including an optical material in which transmittance in the wavelength range of above-described (5) is higher than transmittance in the wavelength range of above-described (2), as in the optical material in the preferred embodiment of the present disclosure, it is considered that an effect of preventing and reducing asthenopia can be obtained without significantly impairing brightness or visibility.

By having transmittance in the wavelength ranges of above-described (1) to (5), an effect of preventing and reducing asthenopia or the like can be obtained, and a lens having a natural hue in appearance for a user can be provided.

From the above viewpoint, in above-described (5), the maximum value T5 is preferably 75% or more, and more preferably the maximum value T5 is 80% or more.

Further, the upper limit of the maximum value T5 is not particularly limited, and for example, the maximum value T5 may be 95% or less, or may 90% or less.

From the above viewpoint, in above-described (4), it is preferable that the minimum value T4 is 70% or more.

Further, the upper limit of the minimum value T4 is not particularly limited, and for example, the minimum value T4 may be 80% or less, or may be 75% or less.

In the optical material of the present disclosure, from the viewpoint of excellent visibility and shielding against light of from 445 nm to 485 nm, in the transmittance curve, further:
(4) it is preferable that the transmittance curve has a minimum value T4 of transmittance at a wavelength of from 540 nm to 620 nm, the minimum value T4 is 65% or more, and the maximum value T1, the minimum value T4, and the minimum value T2 satisfy the maximum value T1>the minimum value T4>the minimum value T2.

In the optical material of the present disclosure, from the viewpoint of excellent visibility and shielding against light of from 445 nm to 485 nm, in the transmittance curve, further:
(4) it is preferable that the transmittance curve has a minimum value T4 of transmittance at a wavelength of from 540 nm to 620 nm, and the minimum value T4 is 65% or more, and (5) it is preferable that the transmittance curve has a maximum value T5 of transmittance at a wavelength of from 485 nm to 540 nm, the maximum value T5 is 70% or more, and the maximum value T5, the minimum value T4, and the minimum value T2 satisfy the maximum value T5>the minimum value T4>the minimum value T2.

In the optical material of the disclosure, it is preferable that the maximum value T5 and the maximum value T1 satisfy the maximum value T5>the maximum value T1 from the viewpoint of excellent visibility and shielding against light of from 445 nm to 485 nm.

The transmittance curve in the present disclosure is measured using a spectrophotometer (for example, a Shimadzu spectrophotometer UV-1600 manufactured by Shimadzu Corporation) and using a 2 mm thick plano lens.

### < CIE 1976 (L^{∗}, a^{∗}, b^{∗}) Color Space >

In the optical material of the present disclosure, a^{∗} is from -4 to 1 and b^{∗} is from -1 to 11 as a hue in the CIE 1976 (L^{∗}, a^{∗}, b^{∗}) color space.

Hereby, a favorable hue of the optical material can be maintained. That is, the optical material of the present disclosure can be suitably used in the application of light-shielding glasses such as sunglasses, for example.

From the viewpoint of maintaining a favorable hue of the optical material, it is preferable that a^{∗} is from -2 to 1 as a hue in the CIE 1976 (L^{∗}, a^{∗}, b^{∗}) color space.

From the same viewpoint, b^{∗} is preferably from 0 to 8, and more preferably from 0 to 5.5, as a hue in the CIE 1976 (L^{∗}, a^{∗}, b^{∗}) color space.

In the present disclosure, a hue in the CIE 1976 (L^{∗}, a^{∗}, b^{∗}) color space is measured using a spectral colorimeter (for example, CM-5, manufactured by Konica Minolta, Inc.).

As specific embodiments of the optical material of the present disclosure, embodiments including an organic dye and a resin material are suitable. Hereby, an optical material can be obtained in which above described (1) to (3) are satisfied in the transmittance curve, and a^{∗} is from -4 to 1 and b^{∗} is from -1 to 11 as a hue in the CIE 1976 (L^{∗}, a^{∗}, b^{∗}) color space.

### (Organic Dye)

The organic dye in the present disclosure is not particularly limited as long as an optical material is obtained in which a transmittance curve satisfies above-described (1) to (3) and a^{∗} and b^{∗} in the CIE 1976 (L^{∗}, a^{∗}, b^{∗}) color space are within the aforementioned ranges, and it is preferable that an organic dye has an absorption peak in a range of from 445 nm to 485 nm.

Examples of the organic dye in the present disclosure include porphyrin-based compounds.

Among the aforementioned compounds, from the viewpoint of satisfying above-described (1) to (3) in the transmittance curve and easily setting a^{∗} and b^{∗} in the CIE 1976 (L^{∗}, a^{∗}, b^{∗}) color space to be within the above ranges, a porphyrin-based compound is preferable, and as the porphyrin-based compound, at least one selected from porphyrin-based compounds represented by the following Formula A is preferably contained.

That is, it is preferable that the optical material of the present disclosure contains an organic dye including at least one selected from porphyrin-based compounds represented by the following Formula A, and a resin material.

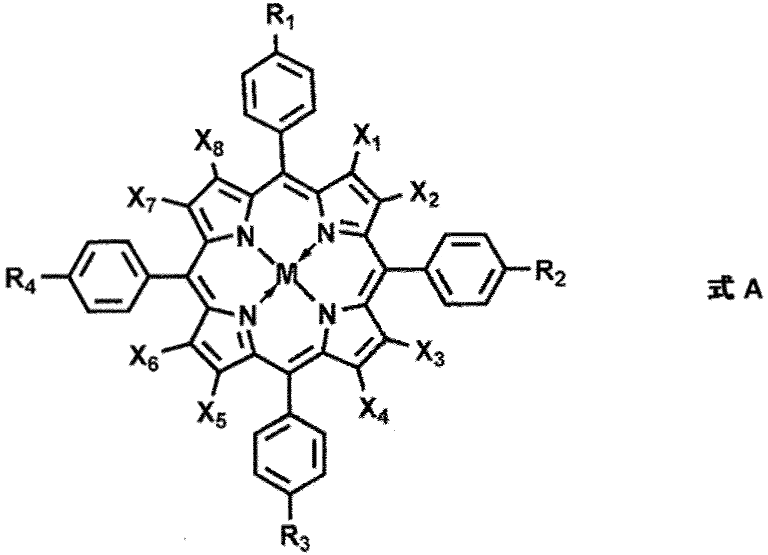

In Formula A, each of X₁ to X₈ independently represents a hydrogen atom or a halogen atom. At least one of X₁ to X₈ is a halogen atom. In Formula A, each of R₁ to R₄ independently represents a hydrogen atom or a straight chain or branched alkyl group, and M represents two hydrogen atoms, a divalent metal atom, a trivalent substituted metal atom, a tetravalent substituted metal atom, a hydroxylated metal atom or an oxidized metal atom.

Examples of the halogen atom include a fluorine atom, a chlorine atom, a bromine atom, and an iodine atom, with a fluorine atom, a chlorine atom or a bromine atom being preferable, and a fluorine atom or a bromine atom being more preferable.

It is preferable that each of R₁ to R₄ independently represents a hydrogen atom or a straight chain or branched alkyl group having from 1 to 8 carbon atoms.

M is preferably Cu, Zn, Fe, Co, Ni, Pt, Pd, Mn, Mg, Mn(OH), Mn(OH)₂, VO, or TiO, and Ni, Pd or VO is more preferable.

In a case in which R₁ to R₄ are straight chain or branched alkyl groups, examples of the straight chain or branched alkyl groups include a methyl group, an ethyl group, an n-propyl group, an isopropyl group, an n-butyl group, an isobutyl group, a tert-butyl group, an n-pentyl group, an isopentyl group, a neopentyl group, a tert-pentyl group, a 1,2-dimethylpropyl group, a 1-methylbutyl group, a 2-methylbutyl group, an n-hexyl group, a 2-methylpentyl group, a 4-methylpentyl group, a 4-methyl-2-pentyl group, a 1,2-dimethylbutyl group, a 2,3-dimethylbutyl group, a 2-ethylbutyl group, an n-heptyl group, a 3-methylhexyl group, a 5-methylhexyl group, a 2,4-dimethylheptyl group, an n-octyl group, a tert-octyl group, a 2-ethylhexyl group, a 2-propylpentyl group, and a 2,5-dimethylhexyl group.

Among these, a methyl group, an ethyl group, an n-propyl group, an isopropyl group, an n-butyl group, an isobutyl group, a tert-butyl group, an n-pentyl group, an isopentyl group, a neopentyl group, a 1,2-dimethylpropyl group, a 1-methylbutyl group, an n-hexyl group, a 1,2-dimethylbutyl group, a 2-ethylbutyl group, an n-heptyl group, an n-octyl group and a 2-ethylhexyl group are preferable, and a methyl group, an ethyl group, an n-propyl group, an isopropyl group, an n-butyl group, an isobutyl group, a tert-butyl group, an n-pentyl group, an isopentyl group, and n-hexyl group, a 1,2-dimethylbutyl group, a 2-ethylbutyl group, an n-heptyl group and an n-octyl group are more preferable.

The porphyrin-based compound used in the optical material of the present disclosure can be produced with reference to a known method itself. For example, the porphyrin-based compound can be produced by the method described in Octabromotetraphenylporphyrin and Its Metal Derivatives (Inorg. Chem. 1991, 30, 239-245).

Further, the compound represented by Formula A can be produced by, for example, synthesizing compounds represented by Formula (B-1) to Formula (B-4) and compounds represented by Formula (C-1) to Formula (C-4) by a dehydration condensation reaction and oxidation (for example, 2,3-dichloro-5,6-dicyano-1,4-benzoquinone), which is a so-called Rothermunt reaction, using an acid catalyst (for example, propionic acid, a boron trifluoride-ethyl ether complex, or trifluoroacetic acid), and by reacting the synthesized compound with a metal or a metal salt (for example, an acetylacetonate complex or a metal acetate), if desired, in an appropriate solvent.

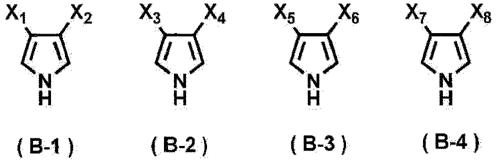

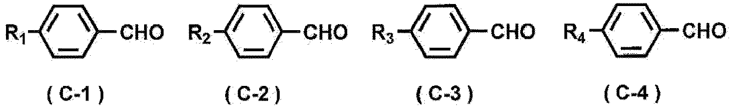

In Formula (B-1) to Formula (B-4) and Formula (C-1) to Formula (C-4), X¹ to X⁸ and R₁ to R₄ have the same meanings as in the case of Formula A.

In the present disclosure, the porphyrin-based compound represented by Formula A actually represents a mixture containing one or two or more isomers. Even when describing a structure of such a mixture containing plural isomers, in the present disclosure, one structural formula represented by Formula A is described for convenience, for example.

The organic dye may be used in a mixture of two or more organic dyes.

In a case of using a mixture of two or more organic dyes, in the optical material of the present disclosure, the organic dye includes an organic dye a that is a porphyrin-based compound represented by Formula A, and an organic dye b that is a porphyrin-based compound represented by Formula A, and in an absorption spectrum in a case in which the optical material is measured at an optical path length of 10 mm using a chloroform solution having a concentration of 0.01 g/L, it is preferable that the organic dye a has an absorption peak at from 445 nm to 455 nm, and the organic dye b has an absorption peak at from 460 nm to 470 nm.

From the viewpoint of being able to more easily obtain an optical material in which the transmittance curve satisfies above-described (1) to (3) and a^{∗} and b^{∗} in the CIE 1976 (L^{∗}, a^{∗}, b^{∗}) color space are within the aforementioned ranges, a ratio of a content of the organic dye *b* to a content of the organic dye *a* (organic dye b/organic dye *a*) is preferably from 0.5 to 2, more preferably from 0.7 to 1.5, and even more preferably from 0.8 to 1.2.

In a case in which two or more porphyrin-based compounds are used in a mixture, examples of the organic dye a having an absorption peak at from 445 nm to 455 nm include X = bromine, M = Ni, Pd. Examples of the organic dye b having an absorption peak at from 460 nm to 470 nm include X = bromine and M = VO (vanadium oxide).

In the optical material of the present disclosure, a mixture containing one or two or more isomers can be used as the porphyrin-based compound. Further, if desired, each isomer can be separated from the mixture, and one compound among the isomers can be used, and further, plural isomers contained at arbitrary proportions can be used in combination. The porphyrin-based compound according to the present disclosure includes not only crystals, but also amorphous forms.

It is preferable that the optical material of the present disclosure contains at least one compound having an absorption peak in a wavelength range of from 445 nm to 485 nm and that a half-value width of the absorption peak is from 10 nm to 50 nm, in an absorption spectrum in a case in which the optical material is measured at an optical path length of 10 mm of a chloroform solution having a concentration of 0.01 g/L.

In the present disclosure, the half-value width means a full width at half maximum, and is represented by a distance (nm) between two intersection points formed by a straight line parallel to a transverse axis drawn at a value of 1/2 of an absorption coefficient value (eg) at an absorption maximum wavelength, and the absorption peak, in an absorption spectrum.

In the optical material of the present disclosure, it is preferable that a content of the organic dye is from 1 ppm to 6 ppm. In the optical material of the present disclosure, even when the content of the organic dye is a relatively small amount of from 1 ppm to 6 ppm, favorable visibility and shielding against light of from 445 nm to 485 nm can both be obtained.

Since the content of the organic dye is a relatively small amount, a large amount of components other than the organic dye can be contained in the entire optical material, and it is easy to achieve the above-described (1) to (3) in the transmittance curve. Further, the content of the organic dye being a relatively small amount contributes to maintaining a favorable hue in the CIE 1976 (L^{∗}, a^{∗}, b^{∗}) color space.

From the same viewpoint as described above, the content of the organic dye is more preferably from 1 ppm to 5 ppm, even more preferably from 1 ppm to 4 ppm, and particularly preferably from 2 ppm to 4 ppm.

In the present disclosure, ppm means ppm on a mass basis.

### (Resin Material)

A resin material in the present disclosure is described.

In the present disclosure, as the resin material, a resin material such as a commercial product or the like may be used, or a resin material obtained from a resin monomer may be used.

In the present disclosure, although a resin material with no particular limitations can be used, a transparent resin is preferable.

Description follows regarding a resin material and a resin monomer for obtaining a resin material.

Examples of the resin material include polyurethane, polythiourethane, polysulfide, polycarbonate, poly(meth)acrylate, polyolefin, cyclic polyolefin, polyallyl, polyurethane urea, polyene-polythiol polymer, ring-opening metathesis polymer, polyester, and epoxy resin. At least one selected from polyurethane, polythiourethane, polysulfide, polycarbonate, poly(meth)acrylate, and polyolefin can be preferably used, and polythiourethane, polysulfide, poly(meth)acrylate, polyallyl, or polycarbonate can be more preferably used, and polythiourethane can be more even more preferably used. These materials are highly transparent materials, and can be suitably used for optical materials.

These materials may be used singly, or may be a composite material thereof.

Polyurethane is obtained from a polyisocyanate compound and a polyol compound which are resin monomers. Polythiourethane includes a constituent unit derived from a polyisocyanate compound and a constituent unit derived from a polythiol compound. A composition for the optical material can contain resin monomers constituting these resins.

Examples of the polyisocyanate compound include: aliphatic polyisocyanate compounds such as 1,6-hexamethylene diisocyanate, 1,5-pentamethylene diisocyanate, 2,2,4-trimethylhexane diisocyanate, 2,4,4-trimethylhexamethylene diisocyanate, lysine diisocyanatomethyl ester, lysine triisocyanate, m-xylylene diisocyanate, a,a,a',a'-tetramethylxylylene diisocyanate, bis(isocyanatomethyl)naphthalene, mesitylylene triisocyanate, bis(isocyanatomethyl)sulphide, bis(isocyanatoethyl)sulphide, bis(isocyanatomethyl)disulphide, bis(isocyanatoethyl)disulphide, bis(isocyanatomethylthio)methane, bis(isocyanatoethylthio)methane, bis(isocyanatoethylthio)ethane and bis(isocyanatomethylthio)ethane; alicyclic polyisocyanate compounds such as isophorone diisocyanate, 1,3-bis(isocyanatomethyl)cyclohexane, 1,4-bis(isocyanatomethyl)cyclohexane, dicyclohexylmethane diisocyanate, cyclohexane diisocyanate, methylcyclohexane diisocyanate, dicyclohexyldimethylmethane isocyanate, 2,5-bis(isocyanatomethyl)bicyclo-[2.2.1]-heptane, 2,6-bis(isocyanatomethyl)bicyclo-[2.2.1]-heptane, 3,8-bis(isocyanatomethyl)tricyclodecane, 3,9-bis(isocyanatomethyl)tricyclodecane, 4,8-bis(isocyanatomethyl)tricyclodecane and 4,9-bis(isocyanatomethyl)tricyclodecane; aromatic polyisocyanate compounds such as naphthalene diisocyanate, m-phenylene diisocyanate, p-phenylene diisocyanate, 2,4-tolylene diisocyanate, 2,6-tolylene diisocyanate, biphenyl diisocyanate, diphenylmethane-2,2'-diisocyanate, diphenylmethane-2,4'-diisocyanate, diphenylmethane-4,4'-diisocyanate, benzene triisocyanate and diphenylsulfide-4,4-diisocyanate; and heterocyclic polyisocyanate compounds such as 2,5-diisocyanatothiophene, 2,5-bis(isocyanatomethyl)thiophene, 2,5-diisocyanato tetrahydrothiophene, 2,5-bis(isocyanatomethyl)tetrahydrothiophene, 3,4-bis(isocyanatomethyl)tetrahydrothiophene, 2,5-diisocyanato-1,4-dithiane, 2,5-bis(isocyanatomethyl)-1,4-dithiane, 4,5-diisocyanato-1,3-dithiolane and 4,5-bis(isocyanatomethyl)-1,3-dithiolane, and at least one selected from these compounds can be used.

The polyol compound is one or more aliphatic or alicyclic alcohol, and specifically, examples thereof include a straight chain or branched aliphatic alcohol, an alicyclic alcohol, and an alcohol in which ethylene oxide, propylene oxide, and ε-caprolactone are added to these alcohols, and at least one selected from these alcohols can be used.

Examples of the straight chain or branched aliphatic alcohol include ethylene glycol, diethylene glycol, triethylene glycol, propylene glycol, dipropylene glycol, tripropylene glycol, 1,3-propane diol, 2,2-dimethyl-1,3-propane diol, 2,2-diethyl-1,3-propane diol, 1,2-butane diol, 1,3-butane diol, 1,4-butane diol, 3-methyl-1,3-butane diol, 1,2-pentane diol, 1,3-pentane diol, 1,5-pentane diol, 2,4-pentane diol, 2-methyl-2,4-pentane diol, 3-methyl-1,5-pentane diol, 1,6-hexanediol, 2,5-hexanediol, glycerol, diglycerol, polyglycerol, trimethylol propane, pentaerythritol, and di(trimethylol propane).

Examples of the alicyclic alcohol include 1,2-cyclopentanediol, 1,3-cyclopentanediol, 3-methyl-1,2-cyclopentanediol, 1,2-cyclohexanediol, 1,3-cyclohexanediol, 1,4-cyclohexanediol, 4,4'-bicyclohexanol, and 1,4-cyclohexanedimethanol, and at least one selected from these alcohols can be used.

A compound in which ethylene oxide, propylene oxide or ε-caprolactone is added to these alcohols may be used. Examples include an ethylene oxide adduct of glycerol, an ethylene oxide adduct of trimethylol propane, an ethylene oxide adduct of pentaerythritol, a propylene oxide adduct of glycerol, a propylene oxide adduct of trimethylol propane, a propylene oxide adduct of pentaerythritol, caprolactone-modified glycerol, caprolactone-modified trimethylol propane, and caprolactone-modified pentaerythritol, and at least one selected from these compounds can be used.

Examples of the polythiol compound include: aliphatic polythiol compounds such as methane dithiol, 1,2-ethane dithiol, 1,2,3-propane trithiol, 1,2-cyclohexane dithiol, bis(2-mercaptoethyl)ether, tetrakis(mercaptomethyl)methane, diethylene glycol bis(2-mercaptoacetate), diethylene glycol bis(3-mercaptopropionate), ethylene glycol bis(2-mercaptoacetate), ethylene glycol bis(3-mercaptopropionate), trimethylol propane tris(2-mercaptoacetate), trimethylol propane tris(3-mercaptopropionate), trimethylol ethane tris(2-mercaptoacetate), trimethylol ethane tris(3-mercaptopropionate), pentaerythritol tetrakis(2-mercaptoacetate), pentaerythritol tetrakis(3-mercaptopropionate), bis(mercaptomethyl)sulfide, bis(mercaptomethyl)disulfide, bis(mercaptoethyl)sulfide, bis(mercaptoethyl)disulfide, bis(mercaptopropyl)sulfide, bis(mercaptomethylthio)methane, bis(2-mercaptomethylthio)methane, bis(3-mercaptopropyl thio)methane, 1,2-bis(mercaptomethylthio)ethane, 1,2-bis(2-mercaptoethylthio)ethane, 1,2-bis(3-mercaptopropyl thio)ethane, 1,2,3-tris(mercaptomethylthio)propane, 1,2,3-tris(2-mercaptoethylthio)propane, 1,2,3-tris(3-mercaptopropyl thio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)m ethane, bis(2,3-dimercaptopropyl) sulfide, 2,5-dimercaptomethyl-1,4-dithiane, 2,5-dimercapto-1,4-dithiane, 2,5-dimercaptomethyl-2,5-dimethyl-1,4-dithiane, and esters of these thioglycolic acids and mercaptopropionic acids, hydroxymethylsulfidobis (2-mercaptoacetate), hydroxymethylsulfidobis (3-mercaptopropionate), hydroxyethylsulfidobis (2-mercaptoacetate), hydroxyethyldisulfidobis (3-mercaptopropionate), hydroxymethyldisulfidobis (2-mercaptoacetate), hydroxymethyldisulfidobis (3-mercaptopropionate), hydroxyethyldisulfidobis (2-mercaptoacetate), hydroxyethyldisulfidobis (3-mercaptopropionate), 2-mercaptoethyletherbis(2-mercaptoacetate), 2-mercaptoethyletherbis(3-mercaptopropionate), thiodiglycolic acid bis(2-mercaptoethyl ester), thiodipropionic acid bis(2-mercaptoethyl ester), thiodiglycolic acid bis(2-mercaptoethyl ester), dithiodipropionic acid bis(2-mercaptoethyl ester), 1,1,3,3-tetrakis(mercaptomethylthio)propane, 1,1,2,2-tetrakis(mercaptomethylthio)ethane, 4,6-bis(mercaptomethylthio)-1,3-dithian, tris(mercaptomethylthio)methane, and tris(mercaptoethylthio)methane; an aromatic polythiol compound such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptomethyl)benzene, 1,3-bis(mercaptoethyl)benzene, 1,4-bis(mercaptoethyl)benzene, 1,3,5-tris mercaptobenzene, 1,3,5-tris(mercaptomethyl)benzene, 1,3,5-tris(mercaptomethyleneoxy)benzene, 1,3,5-tris(mercaptoethyleneoxy)benzene, 2,5-toluene dithiol, 3,4-toluene dithiol, 1,5-naphthalene dithiol, and 2,6-naphthalene dithiol; and a heterocyclic polythiol compound such as 2-methylamino-4,6-dithiol-sym-triazine, 3,4-thiophene dithiol, bismuthiol, 2,5-bis(mercaptomethyl)-1,4-dithiane, 4,6-bis(mercaptomethylthio)-1,3-dithiane, and 2-(2,2-bis(mercaptomethylthio)ethyl)-1,3-dithiane, and at least one selected from these compounds can be used.

The polysulfide can be obtained by a method of ring opening polymerization of a polyepithio compound or a polythiethane compound, which are resin monomers. The composition for the optical material can contain resin monomers constituting these resins.

As the polyepithio compound, there are no particular limitations, and those described in, for example, Japanese Patent No. 6216383, can be used.

As the polythietane compound, a metal-containing thietane compound or a non-metal thietane compound can be used. Specifically, for example, those described in Japanese Patent No. 6216383 can be used.

Although the polycarbonate can be obtained by a method of reacting an alcohol and a phosgene, a method of reacting an alcohol and a chloroformate, or an ester exchange reaction of a carbonate diester compound, a generally available commercial polycarbonate resin can also be used. As a commercial product, the Panlite series manufactured by Teijin Chemicals Ltd. or the like can be used. The composition for the optical material of the present disclosure can contain polycarbonate as a resin material.

As the poly(meth)acrylate, there are no particular limitations, and those described in, for example, Japanese Patent No. 6216383, can be used.

As the polyolefin, there are no particular limitations, and for example, the specific examples described in Japanese Patent No. 6216383, a cyclic polyolefin, a polymerization reaction of olefin, and a method of producing a polyolefin can be used.

The polyallyl is produced by polymerizing at least one allyl group-containing monomer selected from allyl group-containing monomers in the presence of a known radical-generating polymerization catalyst.

As the allyl group-containing monomer, allyl diglycol carbonate and diallyl phthalate are generally commercially available, and these can be suitably used.

The polyurethane urea is a reaction product formed of a polyurethane prepolymer and a diamine curing agent, and a representative example is sold by PPG Industries, Inc. under the trademark TRIVEX. Polyurethane polyurea is a highly transparent material and can be suitably used.

The polyene-polythiol polymer is a polymer product formed by an addition polymerization and an ethylene chain polymerization, the addition polymerization including a polyene compound having two or more ethylenically functional groups in one molecule and a polythiol compound having two or more thiol groups in one molecule.

As the polyene compound in the polyene-polythiol polymer, for example, those described in Japanese Patent No. 6216383 can be used.

The ring-opening metathesis polymer is a polymer formed by ring-opening polymerization of cyclic olefins using a catalyst. As the cyclic olefins that can be subjected to the ring-opening polymerization, for example, those described in Japanese Patent No. 6216383 can be used.

The polyester undergoes condensation polymerization in the presence of a Lewis acid catalyst typified by an antimony or a germanium compound, or a known polyester production catalyst such as an organic acid or an inorganic acid. Specific examples thereof include
a polyester formed from one or two or more selected from polycarboxylic acids containing dicarboxylic acids and ester-forming derivatives thereof and one or two or more selected from polyhydric alcohols containing glycols,
or a polyester formed from a hydroxycarboxylic acid or an ester-forming derivative thereof,
or a polyester formed from a cyclic ester.

As the dicarboxylic acid and the glycol, for example, those described in Japanese Patent No. 6216383 can be used.

As the polyester, for example, those described in Japanese Patent No. 6216383 can be used.

The epoxy resin is a resin formed by ring-opening polymerization of an epoxy compound, and as the epoxy compound, for example, those described in Japanese Patent No. 6216383 can be used.

### (Additive)

The optical material of the present disclosure may contain an additive as another component. Examples of the additive include a polymerization catalyst, an internal mold release agent, a dye, a bluing agent, and an ultraviolet absorbing agent. In the present disclosure, when polyurethane and polythiourethane are obtained, a polymerization catalyst may or may not be used.

An example of the internal mold release agent is an acidic phosphoric acid ester. Examples of the acidic phosphoric acid ester include a phosphoric monoester and a phosphoric diester, and each of these can be used singly, or in a mixture of two or more thereof. An example of the bluing agent is a bluing agent having an absorption band in a wavelength range of from orange to yellow in a visible light region and having a function of adjusting a hue of an optical material formed of a resin material. The bluing agent more specifically contains a substance exhibiting a blue to purple color.

Examples of the ultraviolet absorbing agent include benzophenone-based ultraviolet absorbing agents such as 2,2'-dihydroxy-4-methoxybenzophenone, 2-hydroxy-4-acryloyloxybenzophenone, 2-hydroxy-4-acryloyloxy-5-tert-butylbenzophenone, and 2-hydroxy-4-acryloyloxy-2',4'-dichlorobenzophenone; triazine-based ultraviolet absorbing agents such as 2-[4-[(2-hydroxy-3-dodecyloxypropyl)oxy]-2-hydroxyphenyl]4,6-bis(2,4-dimethylphenyl)-1,3,5-triazine, 2-[4-(2-hydroxy-3-tridecyloxypropyl)oxy]-2-hydroxyphenyl]-4,6-bis(2,4dimethylphenyl)-1,3,5-triazine, 2-[4-[(2-hydroxy-3-(2'-ethyl)hexyl)oxy]-2-hydroxyphenyl]-4,6-bis(2,4-dimethylphenyl)-1,3,5-triazine, 2,4-bis(2-hydroxy-4-butyloxyphenyl)-6-(2,4-bis-butyloxyphenyl)-1,3,5-triazine, and 2-(2-hydroxy-4-[1-octyloxycarbonylethoxy]phenyl)-4,6-bis(4-phenylphenyl)-1,3,5-triazine; and benzotriazole-based ultraviolet absorbing agents such as 2-(2H-benzotriazol-2-yl)-4-methylphenol, 2-(2H-benzotriazol-2-yl)-4-tert-octylphenol, 2-(2H-benzotriazol-2-yl)-4,6-bis(1-methyl-1-phenylethyl)phenol, 2-(2H-benzotriazol-2-yl)-4,6-di-tert-pentylphenol, 2-(5-chloro-2H-benzotriazol-2-yl)-4-methyl-6-tert-butylphenol, 2-(5-chloro-2H-benzotriazol-2-yl)-2,4-tertbutylphenol, and 2,2'-methylenebis[6-(2H-benzotriazol-2-yl)-4-(1, 1,3,3-tetramethylbutyl)phenol], and preferably the benzotriazole-based ultraviolet absorbing agent 2-(2H-benzotriazol-2-yl)-4-tert-octylphenol or 2-(5-chloro-2H-benzotriazol-2-yl)-4-methyl-6-tert-butylphenol. These ultraviolet absorbing agents may be used singly, or in combination of two or more thereof.

A commercial product may be used as the ultraviolet absorbing agent. Examples of the commercial product include Tinuvin 326 (manufactured by BASF Japan Ltd.), and Viosorb 583 (manufactured by Kyodo Chemical Co., Ltd.).

### (Yellowness)

In the optical material of the present disclosure, it is preferable that a yellowness is from -2 to 13.

Hereby, for example, in a case in which the optical material of the present disclosure is used as a lens, high quality can be imparted to the lens.

In the present disclosure, a yellowness may be referred to as a yellow index (YI).

In the optical material of the present disclosure, a yellowness is more preferably from -1 to 8.5.

The YI is measured in a 2 mm thick plano lens using a spectral colorimeter (for example, CM-5 manufactured by Konica Minolta, Inc.).

### (Luminous Transmittance)

In the optical material of the present disclosure, it is preferable that a luminous transmittance is 75% or more.

Hereby, in a case in which visibility needs to be ensured through an optical material in actual use (for example, in a case in which the optical material of the present disclosure is used as eyeglass lenses or the like), favorable visibility can be obtained.

The luminous transmittance is measured in a 2 mm thick plano lens using a spectral colorimeter (for example, CM-5 manufactured by Konica Minolta, Inc.).

### < Composition for Optical Material >

The optical material can be produced using, for example, a composition for an optical material described below.

The composition for an optical material can contain the components described above, and can contain, for example, the above-described resin material or the above-described resin monomer, and the above-described organic dye.

The content of the organic dye is preferably from 0.0001 to 0.0006 parts by mass, more preferably from 0.0001 to 0.0005 parts by mass, and even more preferably from 0.0002 to 0.0004 parts by mass, with respect to the total 100 parts by mass of the above-described resin material or the above-described resin monomer.

By containing the organic dye at the above amount, an optical material that satisfies above-described (1) to (3) in the transmittance curve can be suitably obtained.

The organic dye described above can be used as the organic dye. In addition, a resin modifier or the like may be contained as another component.

In the present disclosure, the composition for an optical material can be obtained by mixing the components described above by a predetermined method.

The order and method of mixing each component in the composition are not particularly limited as long as each component can be uniformly mixed, and a known method can be used.

An example of the known method is a method of preparing a masterbatch containing a predetermined amount of an additive, dispersing the masterbatch in a solvent, and dissolving the masterbatch. For example, in a case of a polyurethane resin, there is a method of preparing a masterbatch by dispersing and dissolving an additive in a polyisocyanate compound.

A molded body containing an organic dye can be obtained by a method of mixing and polymerizing a composition for an optical material which contain an organic dye and a resin material monomer, or a method of curing a composition for an optical material which contains an organic dye and a resin material.

The optical material of the present disclosure can be used in the form of a molded body containing an organic dye and a resin material. Further, the molded body may be a molded body that is obtained by molding the composition for an optical material of the present disclosure.

### < Aspects of Optical Material >

Representative examples of aspects of the optical material of the present disclosure include an optical material formed of a substrate, an optical material formed of a substrate and a film layer, an optical material formed of a substrate and a coating layer, and an optical material formed of a substrate, a film layer, and a coating layer.

An example of the substrate is a lens substrate.

Specific examples of the optical material of the present disclosure include an optical material formed of a substrate, an optical material formed by laminating a film layer on at least one surface of a substrate, an optical material formed by laminating a coating layer on at least one surface of a substrate, an optical material formed by laminating a film layer and a coating layer on at least one surface of a substrate, and an optical material formed by sandwiching a film layer between two substrates.

Examples of the coating layer include a primer layer, a hard coating layer, an anti-reflection layer, an anti-fogging coating layer, an anti-fouling layer, and a water-repellent layer. These coating layers can each be used alone, or plural coating layers can be used in a multi-layer manner. In a case in which the coating layer is applied to both surfaces, the same coating layer may be applied to each surface or a different coating layer may be applied to each surface.

The amount of organic dye contained in the optical material is not particularly limited as long as it satisfies the characteristics of the above-described transmittance curve; however, in a case in which one or more porfin-based compounds described above are used, from the viewpoint of the effects described above, from 1 ppm to 6 ppm is preferable, from 1 ppm to 4 ppm is more preferable, and from 2 ppm to 4 ppm is even more preferable.

For example, a molded body (a lens substrate or an optical film) is prepared using the composition for an optical material which does not contain an organic dye, and then, the molded body is immersed in a dispersion liquid that is obtained by dispersing the organic dye in water or a solvent to impregnate the molded body with the organic dye, and the molded body is dried. The optical material can be prepared using the molded body that is obtained in this manner.

Further, after preparing the optical material, it is also possible to impregnate the optical material with the porphyrin-based compound represented by Formula A described above. In addition, a plastic eyeglass lens that includes a lens substrate, and if necessary, a film layer and a coating layer which are laminated, can be immersed in a dispersion liquid containing an organic dye and impregnated with the organic dye.

The impregnation amount of organic dye can be controlled to a desired impregnation amount by the concentration of the organic dye in the dispersion liquid, the temperature of the dispersion liquid, and the period of time for immersing the resin material composition. The higher the concentration, the higher the temperature, and the longer the immersion time period, the larger the impregnation amount. In a case in which it is desired to precisely control the impregnation amount, the immersion is repeated plural times under the condition of a small impregnation amount.

Further, it is also possible to form an organic dye-containing coating layer on an optical material such as a plastic lens by using a coating material containing an organic dye (a composition for an optical material).

An optical material having such a configuration can be suitably used as a plastic spectacle lens.

The present disclosure is not limited to the above-described embodiments, and various aspects are possible as long as the effects of the present invention are not impaired.

In the present disclosure, for example, an optical material can be obtained without using the "composition for an optical material containing a porphyrin-based compound represented by Formula A described above". The "composition for an optical material" described above can be used except that the porphyrin-based compound represented by Formula A described above is not contained, and the same configuration can be adopted.

### < Application of Optical Material >

Examples of uses of the optical material of the present disclosure include:
a plastic lens for a plastic eyeglasses lens, goggles, an eyeglasses lens for correcting vision, a lens for an imaging device, a Fresnel lens for a liquid crystal projector, a lenticular lens, a contact lens or the like; and
an encapsulant for a light emitting diode (LED); an optical waveguide; an optical lens; an optical adhesive used for bonding an optical waveguide or the like; an anti-reflection film used for an optical lens or the like; a transparent coating used for a liquid crystal display device member (a substrate, a light-guiding plate, a film, a sheet or the like); a windshield used for the front glass of a vehicle, a motorcycle helmet, or the like; a transparent substrate; a film attached to a cover of lighting equipment, an irradiation surface of lighting equipment, or the like.

Since the optical material of the present disclosure can contain an ultraviolet absorbing agent, a plastic lens is preferable among the materials described above.

### (Plastic Lens)

The plastic lens can have the following configurations by way of example.

(A) A plastic lens that includes a lens substrate formed of the composition for an optical material: (B) a plastic lens that includes a film or coating layer, which is formed of the composition for an optical material on at least one surface of a lens substrate (here, the lens substrate obtained from the composition for an optical material is excluded); and (C) a plastic lens in which a lens substrate (here, the lens substrate obtained from the composition for an optical material is excluded) is laminated on both surfaces of a film formed of the composition for an optical material.

In the present disclosure, these plastic lenses can be suitably used.

As specific aspects and manufacturing methods of embodiments (A), (B), and (C) described above, the specific aspects and manufacturing method described in Japanese Patent No. 6216383 can be used.

An example of the plastic lens includes a lens substrate containing the resin material described above and the organic dye described above, and a coating layer disposed on one surface or both surfaces of the lens substrate.

Specific examples of the coating layer include a primer layer, a hard coating layer, an anti-reflection layer, an anti-fogging coating layer, an anti-fouling layer, and a water-repellent layer. These coating layers can each be used alone, or plural coating layers can be used in a multi-layer manner. In a case in which the coating layer is applied to both surfaces, the same coating layer may be applied to each surface or a different coating layer may be applied to each surface.

For each of the coating layers, an organic dye used in the present disclosure, an infrared absorbing agent for protecting eyes from infrared rays, a light stabilizer or an antioxidant for improving weather resistance of a lens, a dye or a pigment for improving the fashionability of a lens, a photochromic dye or a photochromic pigment, an antistatic agent, and other known additives for improving the performance of a lens may be used in combination. For the layer to be coated by coating, various leveling agents for the improvement of coatability may be used.

The primer layer is usually formed between a hard coating layer described below and a lens. The primer layer is a coating layer for the purpose of improving adhesion between the hard coating layer formed thereon and the lens, and it is also possible to improve impact resistance in some cases. For the primer layer, any material can be used as long as it has high adhesion to the obtained lens; however, a primer composition containing a urethane-based resin, an epoxy-based resin, a polyester-based resin, a melamine-based resin or polyvinyl acetal as a main component is usually used. For the primer layer, an appropriate solvent that does not affect the lens may be used for the purpose of adjusting a viscosity of the composition. Of course, a solventless primer layer may be used.

The primer layer can be formed by either a coating method or a dry method. In a case in which a coating method is used, a primer composition is applied to a lens by a known application method such as spin coating or dip coating, and then, the primer composition is solidified and a primer layer is thus formed. In a case in which the primer layer is formed by a dry method, the primer layer is formed by a known dry method such as a CVD method or a vacuum vapor deposition method. When forming the primer layer, the surface of the lens may be subjected to a pre-treatment such as an alkali treatment, a plasma treatment or an ultraviolet treatment, if necessary, for the purpose of improving adhesion.

The hard coating layer is a coating layer for the purpose of imparting functions such as scratch resistance, abrasion resistance, moisture resistance, hot water resistance, heat resistance, and weather resistance, to the surface of the lens.

For the hard coating layer, a hard coating composition that contains an organosilicon compound having curability, and one or more oxide fine particle of an element selected from the group of elements Si, Al, Sn, Sb, Ta, Ce, La, Fe, Zn, W, Zr, In, and Ti and/or one or more fine particle composed of a composite oxide of two or more elements selected from the group of these elements, is generally used.

In addition to the components described above, it is preferable that the hard coating composition contains at least one of an amine, an amino acid, a metal acetylacetonate complex, an organic acid metal salt, a perchloric acid, a salt of a perchloric acid, an acid, a metal chloride, or a polyfunctional epoxy compound. For the hard coating composition, an appropriate solvent that does not affect the lens may be used, or no solvent may be used.

The hard coating layer is usually formed by applying a hard coating composition by a known application method such as spin coating or dip coating and curing the hard coating composition. Examples of the curing method include thermal curing and a curing method by irradiation with energy rays such as ultraviolet rays and visible rays. In order to suppress the occurrence of interference fringes, it is preferable that a difference between a refractive index of the hard coating layer and a refractive index of the lens is in the range of ±0.1.

The anti-reflection layer is usually formed on the hard coating layer, as necessary. There is an inorganic system and an organic system for the anti-reflection layer, and in a case of an inorganic system, the anti-reflection layer is formed using an inorganic oxide such as SiO₂ or TiO₂ by a dry method such as a vacuum vapor deposition method, a sputtering method, an ion plating method, an ion beam assist method, or a CVD method. In a case of an organic system, the anti-reflection layer is formed using a composition that contains an organosilicon compound and silica-based fine particles having internal cavities, by a wet manner.

There is a single layer and a multi-layer for the anti-reflection layer, and in a case of using a single layer, it is preferable that a refractive index of the anti-reflection layer is lower than a refractive index of the hard coating layer by at least 0.1 or more. In order to effectively exhibit the anti-reflection function, it is preferable to form a multi-layer anti-reflection film, and in this case, a film having a low refractive index and a film having a high refractive index are alternately laminated. In this case, a refractive index difference between the film having a low refractive index and the film having a high refractive index is preferably 0.1 or more. An example of the film having a high refractive index includes a film formed of ZnO, TiO₂, CeO₂, Sb₂O₅, SnO₂, ZrO₂, Ta₂O₅, or the like, and an example of the film having a low refractive index includes a film formed of SiO₂ or the like.

An anti-fogging layer, an anti-fouling layer, and a water-repellent layer may be formed on the anti-reflection layer, as necessary. In a method of forming an anti-fogging layer, an anti-fouling layer, or a water-repellent layer, a treatment method, a treatment material, and the like are not particularly limited as long as they do not adversely affect the anti-reflection function, and a known anti-fogging treatment method, anti-fouling treatment method, water-repellent treatment method, and material can be used. Examples of the anti-fogging treatment method and the anti-fouling treatment method include a method of covering a surface with a surfactant, a method of applying a hydrophilic film to a surface to obtain water absorbability, a method of covering a surface with fine irregularities to improve water absorbability, a method of using photocatalytic activity to obtain water absorbability, and a method of performing a super water-repellent treatment to prevent adhesion of water droplets. Further, examples of the water-repellent treatment method include a method of forming a water-repellent treatment layer by vapor-depositing or sputtering a fluorine-containing silane compound or the like, and a method of forming a water-repellent treatment layer by dissolving a fluorine-containing silane compound in a solvent and performing coating.

### Examples

Hereinafter, although the present invention is described in more detail with reference to Examples, the present invention is not limited to the following Examples as long as the gist of the present invention is not exceeded. Herein, "parts" are on a mass basis, unless otherwise specified.

### (Preparation of Porphyrin-based Compound)

### (Synthesis Example 1)

15.0 g of a compound represented by Structural Formula (2-a) below was dissolved in 150 ml of N,N-dimethylformamide, and 31.8 g of bromine was added dropwise thereto at from 10 to 20 °C. Stirring was performed at room temperature for 4 hours, the mixture was discharged into 700 g of ice water, and the mixture was neutralized with an aqueous sodium hydroxide solution. The precipitate was collected by filtration, washed with water, washed with methanol, and dried, thereby obtaining 31 g of a compound represented by Structural Formula (2-b) below.

An absorption spectrum of the compound (2-b) was measured using a Shimadzu spectrophotometer UV-1600 manufactured by Shimadzu Corporation at an optical path length of 10 mm of a chloroform solution having a concentration of 0.01 g/L, and as a result, there was an absorption peak at 450 nm. Further, a half-value width of the peak was 24 nm.

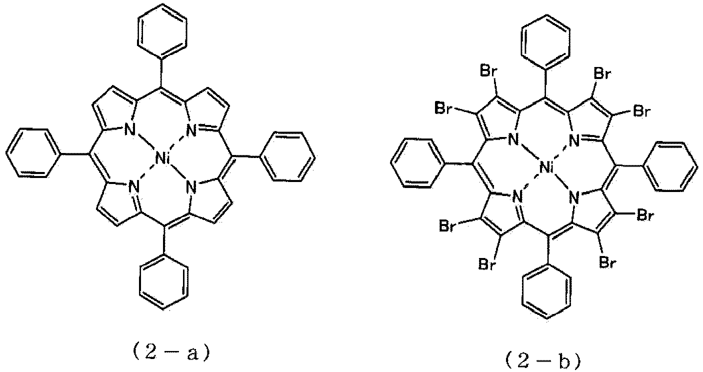

### (Synthesis Example 2)

17.0 g of a compound represented by Structural Formula (3-a) below was dissolved in 170 mL of N,N-dimethylformamide, and 35.8 g of bromine was added dropwise thereto at from 10 °C to 20 °C. Stirring was performed at room temperature for 4 hours, the mixture was discharged into 800 g of ice water, and the mixture was neutralized with an aqueous sodium hydroxide solution. The precipitate was collected by filtration, washed with water, washed with methanol, and dried, thereby obtaining 32 g of a compound represented by Structural Formula (3-b) below (hereinafter, also referred to as compound (3-b)).

An absorption spectrum of the compound (3-b) was measured using a Shimadzu spectrophotometer UV-1600 (manufactured by Shimadzu Corporation) at an optical path length of 10 mm of a chloroform solution having a concentration of 0.01 g/L, and as a result, there was an absorption peak at 463 nm. Further, a half-value width of the absorption peak was 28 nm.

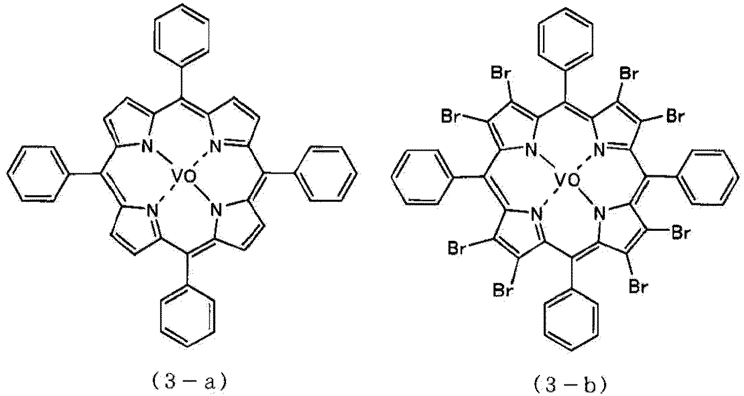

### (Synthesis Example 3)

30.0 g of a compound represented by Structural Formula (4-a) below was dispersed in 150 g of 1,1,2-trichloroethane and 60 g of water, and a solution of 58.7 g of bromine and 60 g of 1,1,2-trichloroethane was added dropwise thereto at from 50 °C to 55 °C. Stirring was performed at from 50 °C to 55 °C for 3 hours, and then cooling was performed to room temperature. A sodium sulfite aqueous solution (4.2 g of sodium sulfite and 21 g of water) was added to the reaction solution, and stirring was performed at room temperature for 15 minutes. Next, a sodium hydroxide aqueous solution (16.2 g of sodium hydroxide and 162 g of water) was added, and stirring was performed at room temperature for 30 minutes. The precipitate was collected by filtration, washed with water, washed with methanol, and dried, thereby obtaining 45.6 g of a compound represented by Structural Formula (4-b) below (hereinafter also referred to as compound (4-b)).

An absorption spectrum of the compound (4-b) was measured using a Shimadzu spectrophotometer UV-1600 (manufactured by Shimadzu Corporation) at an optical path length of 10 mm of a chloroform solution having a concentration of 0.01 g/L, and as a result, there was an absorption peak at 449.5 nm. Further, a half-value width of the absorption peak was 28 nm.

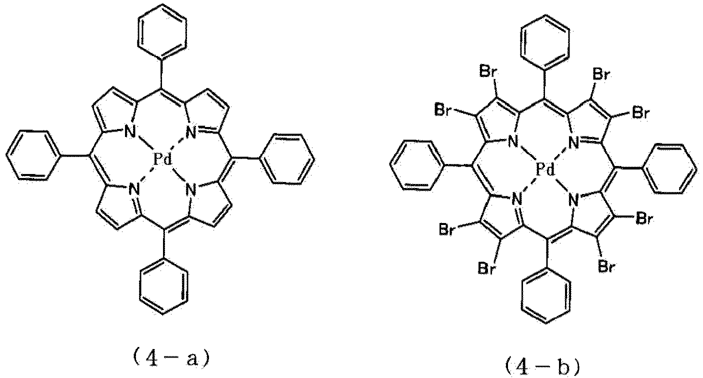

An absorption spectrum of a mixture of the compound (3-b) and the compound (4-b) (on a mass basis (3-b)/(4-b): 1/1, hereinafter also referred to as compound (3-b)/(4-b)) was measured using a Shimadzu spectrophotometer UV-1600 (manufactured by Shimadzu Corporation) at an optical path length of 10 mm of a chloroform solution having a concentration of 0.01 g/L, and as a result, there was an absorption peak at 460 nm. Further, a half-value width of the absorption peak was 34 nm.

### (Example 1)

A mixed solution was prepared with 0.035 parts by mass of dibutyltin (II) dichloride, 0.1 parts by mass of an internal mold release agent for MR manufactured by Mitsui Chemicals, Inc., 1.5 parts by mass of an ultraviolet absorbing agent Viosorb 583 (manufactured by Kyodo Chemical Co., Ltd.), 50.6 parts by mass of a mixture of 2,5-bis(isocyanatomethyl)bicyclo-[2.2.1]-heptane and 2,6-bis(isocyanatomethyl)bicyclo-[2.2.1]-heptane, 0.0004 parts by mass of the compound (3-b)/(4-b) described above as a porphyrin-based compound (a concentration of 4 ppm with respect to the entire mixed solution), 15 ppm of Plast Blue 8514 (manufactured by Arimoto Chemical Co., Ltd.), and 3 ppm of Past Red 8320 (manufactured by Arimoto Chemical Co., Ltd.).

After the mixed solution was stirred at 25 °C for 1 hour to completely dissolve each component, 25.5 parts by mass of 4-mercaptomethyl-1,8-dimercapto-3,6-dithiaoctane and 23.9 parts by mass of pentaerythritol tetrakis(3-mercaptopropionate) were added, and stirring was performed at 25 °C for 30 minutes, thereby obtaining a uniform solution. Defoaming of the uniform solution was carried out at 400 Pa for 1 hour, filtering was performed by a 1 µm PTFE filter, and then the filtered solution was injected into a flat glass mold having a center thickness of 2 mm and a diameter of 77 mm. The glass mold was heated from 25 °C to 120 °C over 16 hours. Thereafter, the glass mold was cooled to room temperature, and a flat lens was removed from the glass mold. The obtained flat lens was further annealed at 120 °C for 2 hours, thereby obtaining a flat lens.

### (Example 2)

A flat lens was obtained in the same manner as in Example 1, except that 1.5 parts by mass of the ultraviolet absorbing agent Viosorb 583 (manufactured by Kyodo Chemical Co., Ltd.) was changed to 0.95 parts by mass of an ultraviolet absorbing agent Tinuvin 326 (manufactured by BASF Japan Ltd.), and the amount of Plast Red 8320 was changed to 5 ppm.

### (Example 3)

A flat lens was obtained in the same manner as in Example 1, except that Plast Blue 8514 and Plast Red 8320 were not added, and an amount of the compound (3-b)/(4-b) described above was changed to 0.0001 parts by mass (a concentration of 1 ppm with respect to the entire mixed solution).

### (Example 4)

A flat lens was obtained in the same manner as in Example 1, except that Plast Blue 8514 and Plast Red 8320 were not added, and an amount of the compound (3-b)/(4-b) was changed to 0.0003 parts by mass (a concentration of 3 ppm with respect to the entire mixed solution).

### (Example 5)

A flat lens was obtained in the same manner as in Example 1, except that Plast Blue 8514 and Plast Red 8320 were not added, and an amount of the compound (3-b)/(4-b) described above was changed to 0.0005 parts by mass (a concentration of 5 ppm with respect to the entire mixed solution).

### (Example 6)

In a flask equipped with a stirring device, a mixed solution was prepared with 0.008 parts by mass of a polymerization catalyst dimethyltin dichloride (trade name: Nestin P, manufactured by The Honjo Chemical Corporation), 0.1 parts by mass of a mold release agent Zelec-UN (manufactured by Stepan Company; acidic phosphoric acid ester), 0.5 parts by mass of an ultraviolet absorbing agent Tinuvin 326 (manufactured by BASF Japan Ltd.), 50.6 parts by mass of a polyisocyanate compound m-xylylene diisocyanate (XDI), 49.3 parts by mass of a polythiol composition having the main components 4,8-dimercaptomethyl-1,11-dimercapto-3,6,9-trithiaundecane, 4,7-dimercaptomethyl-1,11-dimercapto-3,6,9-trithiaundecane and 5,7-dimercaptomethyl-1,11-dimercapto-3,6-9-trithiaundecane, 0.0001 parts by mass of the compound (4-b) described above (a concentration of 1 ppm with respect to the entire mixed solution), 6 ppm of Plast Blue 8514 (manufactured by Arimoto Chemical Co., Ltd.), and 3 ppm of Plast Red 8320 (manufactured by Arimoto Chemical Co., Ltd.).

A flat lens was obtained by the same method as in Example 1 using the mixed solution described above.

### (Example 7 and Example 8)

A flat lens was obtained in the same manner as in Example 6, except that in the mixed solution the contents of the compound (4-b) described above, the Plast Blue 8514, and the Plast Red 8320 were changed to the contents described in Table 1.

### (Comparative Example 1)

As an optical material, Techshield (manufactured by VSP) was used.

### (Comparative Example 2)

As an optical material, Bluetech HC MAX (manufactured by KAISER Co., Ltd.) was used.

### (Comparative Example 3)

A flat lens was obtained in the same manner as in Example 1, except that Plast Blue 8514 and Plast Red 8320 were not added, and an amount of the compound (3-b)/(4-b) described above was changed to 0.0018 parts by mass (a concentration of 18 ppm with respect to the entire mixed solution).

### (Comparative Example 4 and Comparative Example 5)

A flat lens was obtained in the same manner as in Comparative Example 3, except that in the mixed solution the contents of Viosorb 583, Tinuvin 326, the compound (2-b), the compound (3-b), and the compound (4-b) were changed to the contents described in Table 1.

### - Evaluation -

### (Measurement of Luminous Transmittance, Transmittance at a Wavelength of 460 nm, and Transmittance Curve)

For each of the Examples and Comparative Examples, luminous transmittance, transmittance at a wavelength of 460 nm, and a transmittance curve were measured using a Shimadzu spectrophotometer UV-1600 (manufactured by Shimadzu Corporation) as a measuring instrument and a 2 mm thick plano lens.

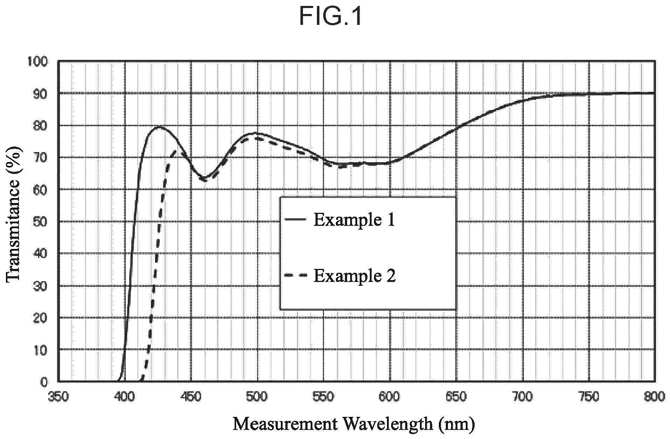

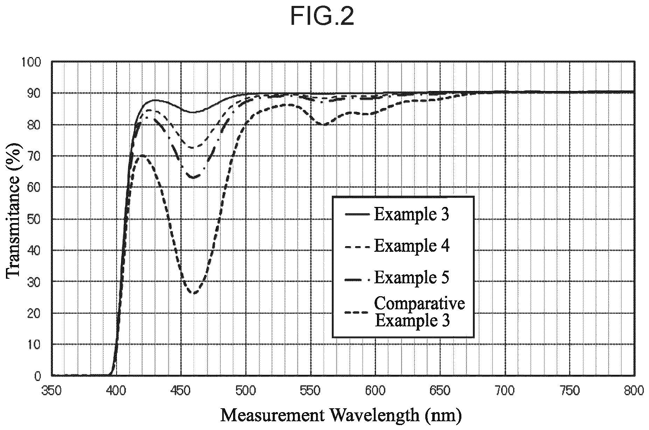

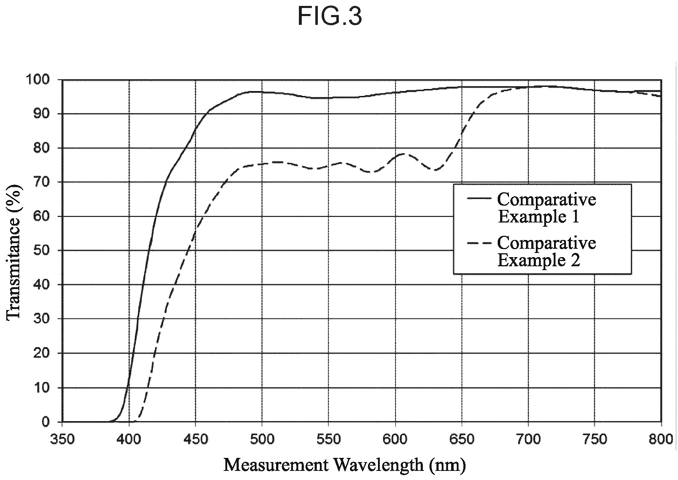

The maximum value T1, the minimum value T2, the maximum value T5, the minimum value T4, luminous transmittance, and transmittance at a wavelength of 460 nm are shown in Table 1, and with regard to the transmittance curve, Fig. 1 illustrates Example 1 and Example 2, Fig. 2 illustrates Example 3 to Example 5 and Comparative Example 3, and Fig. 3 illustrates Comparative Example 1 and Comparative Example 2.

Further, Tables 2 to 10 show the measurement wavelengths and transmittances in Examples 1 to 5 and Comparative Example 3.

Further, luminous transmittance and transmittance at a wavelength of 460 nm in a case in which a hard multi-coating treatment was performed by the following method were measured for the flat lenses of Example 1 and Example 2. The results are shown in Table 1.

In the hard multi-coating treatment, an etching treatment was performed on the flat lenses of Example 1 and Example 2, and then, a hard multi-coating liquid for a refractive index of 1.60 was applied by dipping. Thereafter, the hard multi-coating liquid was cured by heating. A multi-layer anti-reflection layer was formed using several inorganic oxides by a vacuum vapor deposition method.

### (Measurement of Yellowness (YI), and L^{∗}, a^{∗}, and b^{∗})

Yellowness (YI), and L^{∗}, a^{∗}, and b^{∗} in the CIE 1976 (L^{∗}, a^{∗}, b^{∗}) color system were measured in a 9 mm thick plano lens using a spectral colorimeter (CM-5 manufactured by Konica Minolta, Inc.), and the measurement was performed as an index of the hue in the optical material.

The results are shown in Table 1.

### (Ease of Visibility of Personal Computer (PC) Screen)

First, the flat lens obtained in the Examples or the Comparative Examples was disposed in front of a PC screen.

Next, after passing white light generated from the PC screen through the flat lens, a wavelength of light (also referred to as the transmitted light) was measured.

The values of saturation, a^{∗}, and b^{∗} were calculated from the obtained wavelength of the transmitted light. The results are shown in Table 1.

The smaller the values described above, the smaller the difference in the visible hue between a case of viewing through the lens and a case of viewing without passing through the lens.

That is, it means that a hue that is visible through the lens is close to a natural hue that is visible without passing through the lens.

**Table 1**

| | | Ex 1 | Ex 2 | Ex 3 | Ex 4 | Ex 5 | Ex 6 | Ex 7 | Ex 8 | Comparati ve Ex 1 | Comparati ve Ex 2 | Comparati ve Ex 3 | Comparati ve Ex 4 | Comparati ve Ex 5 |
|---|---|---|---|---|---|---|---|---|---|---|---|---|---|---|
| Ultraviolet Absorbing Agent | Viosorb 583 | 1.5 | - | 1.5 | 1.5 | 1.5 | - | - | - | - | - | 1.5 | 1.5 | - |
| | Tinuvin 326 | - | 0.95 | - | - | - | 0.5 | 0.5 | 0.5 | - | - | - | - | 0.95 |
| Porphyrin-based Compound | (2-b) [ppm] | - | - | - | - | - | - | - | - | - | - | - | 5 | - |
| | (3-b) [ppm] | 2 | 2 | 0.5 | 1.5 | 2.5 | - | - | - | - | - | 9 | 7.5 | - |
| | (4-b) [ppm] | 2 | 2 | 0.5 | 1.5 | 2.5 | 1 | 1.5 | 1 | - | - | 9 | - | 4 |
| Bluing Agent | Plast Blue 8514 [ppm] | 15 | 15 | - | - | - | 6 | 8 | - | - | - | - | - | - |
| | Plast Red 8320 [ppm] | 3 | 5 | - | - | - | 3 | 4.5 | - | - | - | - | - | - |
| Hue | YI | -1.0 | 8.4 | 4.3 | 10.1 | 15.5 | 7.8 | 7.5 | 13.1 | 1.8 | 26.9 | 40.7 | 27.8 | 21.2 |
| | L^{∗} | 87.5 | 87.2 | 95.5 | 95.4 | 94.1 | 91.7 | 90.6 | 95.1 | 98.6 | 89.8 | 92.0 | 93.0 | 95.1 |
| | a^{∗} | -0.4 | -2.8 | -1.1 | -2.4 | -3.6 | -2.9 | -2.6 | -4.5 | -3.7 | -7.2 | -8.7 | -7.7 | -6.3 |
| | b^{∗} | -1.0 | 5.3 | 2.9 | 6.8 | 10.5 | 5.1 | 4.8 | 8.8 | 8.2 | 18.2 | 29.9 | 22.5 | 14.3 |
| Maximum Value T1 (400 nm - 445 nm) [%] | | 79.3 | 72.1 | 87.7 | 84.6 | 82.2 | 79.3 | 76.8 | 81.2 | - | - | 70.1 | 77 | 75.7 |
| Minimum Value T2 (445 nm - 485 nm) [%] | | 63.8 | 62.8 | 83.9 | 72.5 | 63.0 | 77.7 | 73.8 | 80.0 | - | - | 26.3 | 41.8 | 67 |
| Maximum Value T3 (485 nm - 540 nm) [%] | | 77.5 | 75.9 | 90.1 | 89.5 | 89.1 | 83.1 | 81.6 | 87.8 | 96.5 | 75.9 | 86.3 | 87.3 | 88.8 |
| Minimum Value T4 (540 nm - 620 nm) [%] | | 67.9 | 66.9 | 89.7 | 88.4 | 87.2 | 78.0 | 74.9 | 87.2 | - | 72.9 | 79.9 | 85 | 87.3 |
| Transmittance at 650 nm - 800 nm [%] | Minimum Value | 79.0 | 79.0 | 90.3 | 90.0 | 89.8 | 83.8 | 82.6 | 88.4 | 96.5 | 84.2 | 88.1 | 88.5 | 89.4 |
| | Average Value | 87.6 | 87.6 | 90.5 | 90.4 | 90.4 | 87.5 | 87.2 | 88.5 | 97.4 | 96.0 | 90.0 | 90 | 89.8 |

| Table 1-continued | | | | | | | | | | | | | | |
|---|---|---|---|---|---|---|---|---|---|---|---|---|---|---|
| Transmittance at 460 nm [%] | | 63.8 | 62.9 | 83.9 | 72.5 | 63.0 | 78.0 | 74.1 | 80.4 | 90.7 | 62.8 | 26.3 | 42.6 | 66.4 |
| Luminous Transmittance [%] | | 71.2 | 70.2 | 89.7 | 88.6 | 87.7 | 79.8 | 77.3 | 87.5 | 95.3 | 74.9 | 81.9 | 85.5 | 88.0 |
| Ease of Visibility of PC Screen | Saturation | 0.05 | 0.05 | 0.07 | 0.21 | 0.33 | 0.02 | 0.02 | 0.11 | 0.13 | 0.33 | 0.96 | 0.68 | 0.32 |
| | a^{∗} | -0.04 | -0.03 | -0.03 | -0.09 | -0.13 | -0.01 | -0.01 | -0.05 | -0.05 | -0.14 | -0.34 | -0.25 | -0.13 |
| | b^{∗} | 0.03 | 0.04 | 0.07 | 0.19 | 0.30 | 0.01 | 0.02 | 0.10 | 0.12 | 0.30 | 0.89 | 0.61 | 0.29 |
| Having hard multi -coating | Transmittance at 460 nm [%] | 69.0 | 68.2 | - | - | - | - | - | - | - | - | - | - | - |
| | Luminous Transmittance [%] | 76.3 | 74.8 | - | - | - | - | - | - | - | - | - | - | - |

As shown in Table 1, in Example 1 to Example 5, visibility and hue were excellent, and shielding against light of from 445 nm to 485 nm was excellent.

On the other hand, in Comparative Example 1 and Comparative Example 2, transmittance had no maximum value at a wavelength of from 400 nm to 445 nm. In Comparative Example 1, transmittance at a wavelength of from 400 nm to 445 nm was high, and shielding was poor. Further, in Comparative Example 2, the hue in the CIE 1976 (L^{∗}, a^{∗}, b^{∗}) color space was not favorable, and the YI value was large.

In Comparative Example 3, since transmittance at a wavelength of from 400 nm to 445 nm was low, luminous transmittance was inferior.

**Table 2**

| | Example 1 | Example 2 | Example 3 | Example 4 | Example 5 |
|---|---|---|---|---|---|
| (3-b)/(4-b) Compound | 4 ppm | 4 ppm | 1 ppm | 3 ppm | 5 ppm |
| Plast Blue 8514 | 15 ppm | 15 ppm | - | - | - |
| Plast Red 8320 | 3 ppm | 5 ppm | - | - | - |

| Measurement Wavelength (nm) | Transmittance (T%) | | | | |
|---|---|---|---|---|---|
| 800 | 90.0 | 90.0 | 90.5 | 90.4 | 90.5 |
| 799 | 90.0 | 90.0 | 90.5 | 90.5 | 90.5 |
| 798 | 90.0 | 90.0 | 90.5 | 90.5 | 90.5 |
| 797 | 90.0 | 90.0 | 90.5 | 90.5 | 90.5 |
| 796 | 90.0 | 90.0 | 90.5 | 90.4 | 90.5 |
| 795 | 90.0 | 90.0 | 90.5 | 90.4 | 90.5 |
| 794 | 90.0 | 90.0 | 90.5 | 90.4 | 90.5 |
| 793 | 90.0 | 90.0 | 90.5 | 90.4 | 90.5 |
| 792 | 90.0 | 90.0 | 90.5 | 90.5 | 90.5 |
| 791 | 90.0 | 90.0 | 90.5 | 90.5 | 90.5 |
| 790 | 90.0 | 90.0 | 90.5 | 90.5 | 90.5 |
| 789 | 90.0 | 90.0 | 90.5 | 90.5 | 90.5 |
| 788 | 89.9 | 90.0 | 90.5 | 90.5 | 90.5 |
| 787 | 89.9 | 90.0 | 90.5 | 90.5 | 90.5 |
| 786 | 90.0 | 90.0 | 90.5 | 90.4 | 90.5 |
| 785 | 89.9 | 90.0 | 90.5 | 90.4 | 90.5 |
| 784 | 89.9 | 90.0 | 90.5 | 90.5 | 90.5 |
| 783 | 89.9 | 90.0 | 90.5 | 90.5 | 90.5 |
| 782 | 89.9 | 90.0 | 90.5 | 90.4 | 90.5 |
| 781 | 89.9 | 90.0 | 90.5 | 90.4 | 90.5 |
| 780 | 89.9 | 90.0 | 90.5 | 90.4 | 90.5 |
| 779 | 89.9 | 90.0 | 90.5 | 90.4 | 90.5 |
| 778 | 89.9 | 90.0 | 90.5 | 90.4 | 90.5 |
| 777 | 89.9 | 90.0 | 90.5 | 90.4 | 90.5 |
| 776 | 89.9 | 90.0 | 90.5 | 90.4 | 90.5 |
| 775 | 89.9 | 90.0 | 90.5 | 90.5 | 90.5 |
| 774 | 89.9 | 90.0 | 90.5 | 90.4 | 90.5 |
| 773 | 89.9 | 90.0 | 90.5 | 90.4 | 90.5 |
| 772 | 89.9 | 90.0 | 90.5 | 90.5 | 90.5 |
| 771 | 89.9 | 90.0 | 90.5 | 90.5 | 90.5 |
| 770 | 89.9 | 90.0 | 90.5 | 90.4 | 90.5 |
| 769 | 89.9 | 90.0 | 90.5 | 90.4 | 90.5 |
| 768 | 89.9 | 90.0 | 90.5 | 90.4 | 90.5 |
| 767 | 89.8 | 89.9 | 90.5 | 90.4 | 90.5 |
| 766 | 89.8 | 89.9 | 90.5 | 90.4 | 90.5 |
| | Example 1 | Example 2 | Example 3 | Example 4 | Example 5 |
| (3-b)/(4-b) Compound | 4 ppm | 4 ppm | 1 ppm | 3 ppm | 5 ppm |
| Plast Blue 8514 | 15 ppm | 15 ppm | - | - | - |
| Plast Red 8320 | 3 ppm | 5 ppm | - | - | - |

| Measurement Wavelength (nm) | Transmittance (T%) | | | | |
|---|---|---|---|---|---|
| 765 | 89.8 | 89.9 | 90.5 | 90.4 | 90.5 |
| 764 | 89.8 | 89.9 | 90.5 | 90.4 | 90.5 |
| 763 | 89.8 | 89.9 | 90.5 | 90.4 | 90.5 |
| 762 | 89.8 | 89.9 | 90.5 | 90.4 | 90.5 |
| 761 | 89.8 | 89.9 | 90.5 | 90.4 | 90.5 |
| 760 | 89.8 | 89.9 | 90.5 | 90.4 | 90.5 |
| 759 | 89.8 | 89.9 | 90.5 | 90.4 | 90.4 |
| 758 | 89.8 | 89.9 | 90.5 | 90.4 | 90.4 |
| 757 | 89.8 | 89.8 | 90.5 | 90.4 | 90.4 |
| 756 | 89.8 | 89.8 | 90.5 | 90.4 | 90.4 |
| 755 | 89.7 | 89.8 | 90.5 | 90.4 | 90.4 |
| 754 | 89.7 | 89.8 | 90.5 | 90.4 | 90.4 |
| 753 | 89.7 | 89.8 | 90.5 | 90.4 | 90.4 |
| 752 | 89.7 | 89.8 | 90.5 | 90.4 | 90.4 |
| 751 | 89.7 | 89.8 | 90.4 | 90.4 | 90.4 |

**Table 3**

| | Example 1 | Example 2 | Example 3 | Example 4 | Example 5 |
|---|---|---|---|---|---|
| (3-b)/(4-b) Compound | 4 ppm | 4 ppm | 1 ppm | 3 ppm | 5 ppm |
| Plast Blue 8514 | 15 ppm | 15 ppm | - | - | - |
| Plast Red 8320 | 3 ppm | 5 ppm | - | - | - |

| Measurement Wavelength (nm) | Transmittance (T%) | | | | |
|---|---|---|---|---|---|
| 750 | 89.7 | 89.7 | 90.4 | 90.3 | 90.4 |
| 749 | 89.7 | 89.7 | 90.4 | 90.4 | 90.4 |
| 748 | 89.6 | 89.7 | 90.4 | 90.3 | 90.4 |
| 747 | 89.6 | 89.7 | 90.4 | 90.3 | 90.3 |
| 746 | 89.6 | 89.7 | 90.4 | 90.3 | 90.3 |
| 745 | 89.6 | 89.7 | 90.4 | 90.3 | 90.3 |
| 744 | 89.6 | 89.6 | 90.4 | 90.3 | 90.4 |
| 743 | 89.6 | 89.6 | 90.4 | 90.3 | 90.3 |
| 742 | 89.5 | 89.6 | 90.4 | 90.3 | 90.3 |
| 741 | 89.5 | 89.6 | 90.4 | 90.3 | 90.3 |
| 740 | 89.5 | 89.6 | 90.4 | 90.3 | 90.3 |
| 739 | 89.5 | 89.6 | 90.4 | 90.3 | 90.4 |
| 738 | 89.5 | 89.6 | 90.4 | 90.3 | 90.4 |
| 737 | 89.5 | 89.6 | 90.4 | 90.3 | 90.4 |
| 736 | 89.5 | 89.5 | 90.4 | 90.3 | 90.4 |
| 735 | 89.5 | 89.5 | 90.4 | 90.3 | 90.4 |
| 734 | 89.5 | 89.5 | 90.4 | 90.4 | 90.4 |
| 733 | 89.4 | 89.5 | 90.5 | 90.4 | 90.4 |
| 732 | 89.4 | 89.5 | 90.5 | 90.4 | 90.4 |
| 731 | 89.4 | 89.5 | 90.5 | 90.4 | 90.4 |
| 730 | 89.4 | 89.5 | 90.5 | 90.4 | 90.4 |
| 729 | 89.4 | 89.5 | 90.5 | 90.4 | 90.4 |
| 728 | 89.3 | 89.4 | 90.5 | 90.4 | 90.4 |
| 727 | 89.3 | 89.4 | 90.5 | 90.4 | 90.4 |
| 726 | 89.3 | 89.4 | 90.5 | 90.4 | 90.4 |
| 725 | 89.3 | 89.3 | 90.5 | 90.4 | 90.4 |
| 724 | 89.2 | 89.3 | 90.5 | 90.4 | 90.4 |
| 723 | 89.2 | 89.3 | 90.5 | 90.4 | 90.4 |
| 722 | 89.2 | 89.3 | 90.5 | 90.4 | 90.4 |
| 721 | 89.1 | 89.2 | 90.5 | 90.4 | 90.4 |
| 720 | 89.1 | 89.2 | 90.5 | 90.4 | 90.4 |
| 719 | 89.1 | 89.1 | 90.5 | 90.4 | 90.4 |
| 718 | 89.0 | 89.1 | 90.5 | 90.4 | 90.4 |
| 717 | 89.0 | 89.0 | 90.5 | 90.4 | 90.4 |
| 716 | 889 | 89.0 | 90.5 | 90.4 | 90.4 |
| 715 | 88.8 | 88.9 | 90.5 | 90.4 | 90.4 |
| 714 | 88.8 | 88.9 | 90.5 | 90.4 | 90.4 |
| 713 | 88.8 | 88.8 | 90.5 | 90.4 | 90.4 |
| 712 | 88.7 | 88.8 | 90.5 | 90.4 | 90.4 |
| 711 | 88.6 | 88.7 | 90.5 | 90.4 | 90.4 |
| 710 | 88.5 | 88.6 | 90.5 | 90.4 | 90.4 |
| 709 | 88.5 | 88.6 | 90.5 | 90.4 | 90.4 |
| 708 | 88.4 | 88.5 | 90.5 | 90.4 | 90.4 |
| 707 | 88.3 | 88.4 | 90.5 | 90.4 | 90.4 |
| 706 | 88.2 | 88.3 | 90.5 | 90.4 | 90.4 |
| 705 | 88.2 | 88.2 | 90.5 | 90.4 | 90.4 |
| 704 | 88.1 | 88.1 | 90.5 | 90.4 | 90.4 |
| 703 | 88.0 | 88.0 | 90.5 | 90.4 | 90.4 |
| 702 | 87.9 | 88.0 | 90.5 | 90.4 | 90.4 |
| 701 | 87.8 | 87.9 | 90.5 | 90.4 | 90.4 |

**Table 4**

| | Example 1 | Example 2 | Example 3 | Example 4 | Example 5 |
|---|---|---|---|---|---|
| (3-b)/(4-b) Compound | 4 ppm | 4 ppm | 1 ppm | 3 ppm | 5 ppm |
| Plast Blue 8514 | 15 ppm | 15 ppm | - | - | - |
| Plast Red 8320 | 3 ppm | 5 ppm | - | - | - |

| Measurement Wavelength (nm) | Transmittance (T%) | | | | |
|---|---|---|---|---|---|
| 700 | 87.7 | 87.8 | 90.5 | 90.4 | 90.4 |
| 699 | 87.6 | 87.7 | 90.5 | 90.4 | 90.4 |
| 698 | 87.5 | 87.6 | 90.5 | 90.4 | 90.4 |
| 697 | 87.4 | 87.4 | 90.5 | 90.4 | 90.4 |
| 696 | 87.3 | 87.3 | 90.5 | 90.4 | 90.4 |
| 695 | 87.1 | 87.2 | 90.5 | 90.4 | 90.4 |
| 694 | 87.0 | 87.1 | 90.5 | 90.4 | 90.4 |
| 693 | 86.9 | 87.0 | 90.5 | 90.4 | 90.4 |
| 692 | 86.8 | 86.8 | 90.5 | 90.4 | 90.4 |
| 691 | 86.6 | 86.7 | 90.5 | 90.4 | 90.4 |
| 690 | 86.5 | 86.6 | 90.5 | 90.4 | 90.4 |
| 689 | 86.4 | 86.4 | 90.5 | 90.4 | 90.4 |
| 688 | 86.2 | 86.3 | 90.5 | 90.4 | 90.4 |
| 687 | 86.1 | 86.1 | 90.5 | 90.4 | 90.4 |
| 686 | 85.9 | 86.0 | 90.4 | 90.4 | 90.4 |
| 685 | 85.8 | 85.8 | 90.4 | 90.4 | 90.4 |
| 684 | 85.6 | 85.7 | 90.4 | 90.3 | 90.3 |
| 683 | 85.4 | 85.5 | 90.4 | 90.4 | 90.3 |
| 682 | 85.3 | 85.4 | 90.4 | 90.3 | 90.3 |
| 681 | 85.1 | 85.2 | 90.4 | 90.3 | 90.3 |
| 680 | 84.9 | 85.0 | 90.4 | 90.3 | 90.3 |
| 679 | 84.8 | 84.9 | 90.5 | 90.3 | 90.3 |
| 678 | 84.6 | 84.7 | 90.5 | 90.3 | 90.3 |
| 677 | 84.4 | 84.5 | 90.5 | 90.3 | 90.3 |
| 676 | 84.2 | 84.3 | 90.5 | 90.3 | 90.3 |
| 675 | 84.1 | 84.1 | 90.4 | 90.3 | 90.3 |
| 674 | 83.9 | 83.9 | 90.4 | 90.3 | 90.3 |
| 673 | 83.7 | 83.8 | 90.4 | 90.3 | 90.2 |
| 672 | 83.5 | 83.6 | 90.4 | 90.3 | 90.2 |
| 671 | 83.3 | 83.4 | 90.4 | 90.3 | 90.2 |
| 670 | 83.1 | 83.2 | 90.4 | 90.2 | 90.2 |
| 669 | 82.9 | 83.0 | 90.4 | 90.3 | 90.2 |
| 668 | 82.7 | 82.8 | 90.4 | 90.2 | 90.2 |
| 667 | 82.5 | 82.6 | 90.4 | 90.2 | 90.2 |
| 666 | 82.3 | 82.4 | 90.4 | 90.2 | 90.1 |
| 665 | 82.1 | 82.2 | 90.4 | 90.2 | 90.1 |
| 664 | 81.9 | 82.0 | 90.4 | 90.2 | 90.1 |
| 663 | 81.7 | 81.8 | 90.4 | 90.2 | 90.1 |
| 662 | 81.5 | 81.6 | 90.4 | 90.2 | 90.1 |
| 661 | 81.3 | 81.4 | 90.4 | 90.2 | 90.0 |
| 660 | 81.1 | 81.2 | 90.4 | 90.1 | 90.0 |
| 659 | 80.9 | 81.0 | 90.4 | 90.1 | 90.0 |
| 658 | 80.7 | 80.8 | 90.4 | 90.1 | 90.0 |
| 657 | 80.5 | 80.6 | 90.4 | 90.1 | 89.9 |
| 656 | 80.3 | 80.4 | 90.4 | 90.1 | 89.9 |
| 655 | 80.0 | 80.2 | 90.3 | 90.1 | 89.9 |
| 654 | 79.8 | 79.9 | 90.3 | 90.0 | 89.8 |
| 653 | 79.6 | 79.7 | 90.3 | 90.0 | 89.8 |
| 652 | 79.4 | 79.5 | 90.3 | 90.0 | 89.8 |
| 651 | 79.2 | 79.3 | 90.3 | 90.0 | 89.8 |

**Table 5**

| | Example 1 | Example 2 | Example 3 | Example 4 | Example 5 |
|---|---|---|---|---|---|
| (3-b)/(4-b) Compound | 4 ppm | 4 ppm | 1 ppm | 3 ppm | 5 ppm |
| Plast Blue 8514 | 15 ppm | 15 ppm | - | - | - |
| Plast Red 8320 | 3 ppm | 5 ppm | - | - | - |

| Measurement Wavelength (nm) | Transmittance (T%) | | | | |
|---|---|---|---|---|---|
| 650 | 79.0 | 79.0 | 90.3 | 90.0 | 89.8 |
| 649 | 78.7 | 78.8 | 90.3 | 90.0 | 89.7 |
| 648 | 78.5 | 78.6 | 90.3 | 90.0 | 89.7 |
| 647 | 78.3 | 78.4 | 90.3 | 90.0 | 89.7 |
| 646 | 78.1 | 78.2 | 90.3 | 89.9 | 89.7 |
| 645 | 77.9 | 78.0 | 90.3 | 89.9 | 89.7 |
| 644 | 77.7 | 77.8 | 90.3 | 89.9 | 89.7 |
| 643 | 77.4 | 77.5 | 90.3 | 89.9 | 89.7 |
| 642 | 77.2 | 77.3 | 90.3 | 89.9 | 89.7 |
| 641 | 77.0 | 77.1 | 90.3 | 89.9 | 89.6 |
| 640 | 76.8 | 76.9 | 90.3 | 89.9 | 89.6 |
| 639 | 76.5 | 78.6 | 90.3 | 89.9 | 89.6 |
| 638 | 76.3 | 76.4 | 90.2 | 89.9 | 89.6 |
| 637 | 76.1 | 76.2 | 90.2 | 89.9 | 89.6 |
| 636 | 75.8 | 75.9 | 90.2 | 89.9 | 89.6 |
| 635 | 75.6 | 75.7 | 90.2 | 89.9 | 89.6 |
| 634 | 75.3 | 75.4 | 90.2 | 89.9 | 89.6 |
| 633 | 75.1 | 75.2 | 90.2 | 89.9 | 89.6 |
| 632 | 74.9 | 75.0 | 90.2 | 89.9 | 89.6 |
| 631 | 74.6 | 74.7 | 90.2 | 89.8 | 89.5 |
| 630 | 74.4 | 74.5 | 90.2 | 89.8 | 89.6 |
| 629 | 74.2 | 74.3 | 90.2 | 89.8 | 89.6 |
| 628 | 73.9 | 74.0 | 90.2 | 89.8 | 89.6 |
| 627 | 73.7 | 73.8 | 90.2 | 89.8 | 89.6 |
| 626 | 73.5 | 73.5 | 90.2 | 89.8 | 89.6 |
| 625 | 73.2 | 73.3 | 90.2 | 89.8 | 89.5 |
| 624 | 73.0 | 73.1 | 90.2 | 89.8 | 89.5 |
| 623 | 72.8 | 72.8 | 90.2 | 89.8 | 89.5 |
| 622 | 72.5 | 72.6 | 90.2 | 89.8 | 89.5 |
| 621 | 72.3 | 72.4 | 90.2 | 89.8 | 89.4 |
| 620 | 72.0 | 72.1 | 90.2 | 89.7 | 89.4 |
| 619 | 71.8 | 71.9 | 90.2 | 89.7 | 89.4 |
| 618 | 71.6 | 71.7 | 90.2 | 89.7 | 89.4 |
| 617 | 71.4 | 71.4 | 90.2 | 89.7 | 89.3 |
| 616 | 71.1 | 71.2 | 90.2 | 89.7 | 89.3 |
| 615 | 70.9 | 71.0 | 90.2 | 89.6 | 89.2 |
| 614 | 70.7 | 70.8 | 90.2 | 89.6 | 89.2 |
| 613 | 70.5 | 70.5 | 90.1 | 89.6 | 89.2 |
| 612 | 70.3 | 70.3 | 90.1 | 89.5 | 89.1 |
| 611 | 70.1 | 70.1 | 90.1 | 89.5 | 89.0 |
| 610 | 69.9 | 69.9 | 90.1 | 89.5 | 89.0 |
| 609 | 69.7 | 69.7 | 90.1 | 89.5 | 88.9 |
| 608 | 69.5 | 69.5 | 90.1 | 89.4 | 88.9 |
| 607 | 69.3 | 69.3 | 90.1 | 89.4 | 88.8 |
| 606 | 69.1 | 69.1 | 90.1 | 89.3 | 88.7 |
| 605 | 69.0 | 69.0 | 90.1 | 89.3 | 88.7 |
| 604 | 68.8 | 68.8 | 90.0 | 89.2 | 88.6 |
| 603 | 68.7 | 68.7 | 90.0 | 89.2 | 88.6 |
| 602 | 68.6 | 68.6 | 90.0 | 89.2 | 88.5 |
| 601 | 68.5 | 68.4 | 90.0 | 89.2 | 88.5 |

**Table 6**

| | Example 1 | Example 2 | Example 3 | Example 4 | Example 5 |
|---|---|---|---|---|---|
| (3-b)/(4-b) Compound | 4 ppm | 4 ppm | 1 ppm | 3 ppm | 5 ppm |
| Plast Blue 8514 | 15 ppm | 15 ppm | - | - | - |
| Plast Red 8320 | 3 ppm | 5 ppm | - | - | - |

| Measurement Wavelength (nm) | Transmittance (T%) | | | | |
|---|---|---|---|---|---|
| 600 | 68.4 | 68.3 | 90.0 | 89.1 | 88.4 |
| 599 | 68.3 | 68.2 | 90.0 | 89.1 | 88.4 |
| 598 | 68.2 | 68.1 | 90.0 | 89.1 | 88.4 |
| 597 | 68.2 | 68.0 | 90.0 | 89.1 | 88.3 |
| 596 | 68.1 | 68.0 | 89.9 | 89.1 | 88.3 |
| 595 | 68.1 | 67.9 | 89.9 | 89.1 | 88.3 |
| 594 | 68.0 | 67.9 | 89.9 | 89.1 | 88.3 |
| 593 | 68.0 | 67.9 | 90.0 | 89.1 | 88.3 |
| 592 | 68.0 | 67.8 | 90.0 | 89.1 | 88.3 |
| 591 | 68.0 | 67.8 | 89.9 | 89.1 | 88.3 |
| 590 | 68.0 | 67.8 | 89.9 | 89.1 | 88.3 |
| 589 | 68.0 | 67.8 | 90.0 | 89.1 | 88.3 |
| 588 | 68.1 | 67.8 | 90.0 | 89.1 | 88.4 |
| 587 | 68.1 | 67.8 | 90.0 | 89.1 | 88.4 |
| 586 | 68.1 | 67.8 | 90.0 | 89.1 | 88.4 |
| 585 | 68.1 | 67.8 | 90.0 | 89.1 | 88.4 |
| 584 | 68.1 | 67.8 | 90.0 | 89.1 | 88.4 |
| 583 | 68.2 | 67.8 | 90.0 | 89.1 | 88.4 |
| 582 | 68.2 | 67.8 | 90.0 | 89.1 | 88.4 |
| 581 | 68.2 | 67.8 | 90.0 | 89.1 | 88.4 |
| 580 | 68.2 | 67.8 | 90.0 | 89.1 | 88.4 |
| 579 | 68.2 | 67.7 | 90.0 | 89.1 | 88.4 |
| 578 | 68.2 | 67.7 | 89.9 | 89.1 | 88.4 |
| 577 | 68.2 | 67.7 | 90.0 | 89.1 | 88.4 |
| 576 | 68.2 | 67.6 | 90.0 | 89.1 | 88.3 |
| 575 | 68.2 | 67.6 | 89.9 | 89.0 | 88.3 |
| 574 | 68.1 | 67.5 | 89.9 | 89.0 | 88.2 |
| 573 | 68.1 | 67.5 | 89.9 | 89.0 | 88.1 |
| 572 | 68.1 | 67.4 | 89.9 | 88.9 | 88.1 |
| 571 | 681 | 67.3 | 89.9 | 88.9 | 88.0 |
| 570 | 68.0 | 67.3 | 89.9 | 88.8 | 87.9 |
| 569 | 68.0 | 67.2 | 89.8 | 88.8 | 87.8 |
| 568 | 68.0 | 67.2 | 89.8 | 88.7 | 87.8 |
| 567 | 67.9 | 67.1 | 89.8 | 88.7 | 87.7 |
| 566 | 67.9 | 67.0 | 89.8 | 88.6 | 87.5 |
| 565 | 67.9 | 67.0 | 89.7 | 88.5 | 87.5 |
| 564 | 67.9 | 67.0 | 89.7 | 88.5 | 87.4 |
| 563 | 67.9 | 67.0 | 89.7 | 88.5 | 87.3 |
| 562 | 67.9 | 66.9 | 89.7 | 88.4 | 87.3 |
| 561 | 67.9 | 66.9 | 89.7 | 88.4 | 87.3 |
| 560 | 68.0 | 67.0 | 89.7 | 88.4 | 87.2 |
| 559 | 68.0 | 67.0 | 89.7 | 88.4 | 87.2 |
| 558 | 68.1 | 67.1 | 89.7 | 88.4 | 87.2 |
| 557 | 68.2 | 67.2 | 89.7 | 88.4 | 87.3 |
| 556 | 68.4 | 67.3 | 89.7 | 88.5 | 87.3 |
| 555 | 68.5 | 67.4 | 89.7 | 88.5 | 87.4 |
| 554 | 68.6 | 67.6 | 89.7 | 88.5 | 87.5 |
| 553 | 68.8 | 677 | 89.7 | 88.6 | 87.6 |
| 552 | 69.0 | 67.9 | 89.8 | 88.7 | 87.7 |
| 551 | 69.2 | 68.1 | 89.8 | 88.8 | 87.9 |

**Table 7**

| | Example 1 | Example 2 | Example 3 | Example 4 | Example 5 |
|---|---|---|---|---|---|
| (3-b)/(4-b) Compound | 4 ppm | 4 ppm | 1 ppm | 3 ppm | 5 ppm |
| Plast Blue 8514 | 15 ppm | 15 ppm | - | - | - |
| Plast Red 8320 | 3 ppm | 5 ppm | - | - | - |

| Measurement Wavelength (nm) | Transmittance (T%) | | | | |
|---|---|---|---|---|---|
| 550 | 69.5 | 68.3 | 89.8 | 88.9 | 88.0 |
| 549 | 69.7 | 68.5 | 89.9 | 88.9 | 88.1 |
| 548 | 69.9 | 68.7 | 89.9 | 89.0 | 88.2 |
| 547 | 70.1 | 68.9 | 89.9 | 89.0 | 88.3 |
| 546 | 70.4 | 69.1 | 89.9 | 89.1 | 88.4 |
| 545 | 70.6 | 69.3 | 89.9 | 89.2 | 88.5 |
| 544 | 70.8 | 69.5 | 89.9 | 89.2 | 88.6 |
| 543 | 71.0 | 69.7 | 89.9 | 89.3 | 88.7 |
| 542 | 71.3 | 69.9 | 90.0 | 89.3 | 88.8 |
| 541 | 71.5 | 70.1 | 90.0 | 89.4 | 88.9 |
| 540 | 71.7 | 70.3 | 90.0 | 89.4 | 89.0 |
| 539 | 71.9 | 70.4 | 90.0 | 89.4 | 89.0 |
| 538 | 72.1 | 70.6 | 90.0 | 89.5 | 89.0 |
| 537 | 72.3 | 70.8 | 90.0 | 89.5 | 89.1 |
| 536 | 72.5 | 71.0 | 90.0 | 89.5 | 89.1 |
| 535 | 72.6 | 71.1 | 90.0 | 89.5 | 89.1 |
| 534 | 72.8 | 71.3 | 90.0 | 89.5 | 89.1 |
| 533 | 73.0 | 71.4 | 90.1 | 89.5 | 89.1 |
| 532 | 73.1 | 71.6 | 90.0 | 89.5 | 89.1 |
| 531 | 73.3 | 71.7 | 90.0 | 89.5 | 89.1 |
| 530 | 73.5 | 71.8 | 90.0 | 89.5 | 89.1 |
| 529 | 73.6 | 72.0 | 90.0 | 89.5 | 89.1 |
| 528 | 73.7 | 72.1 | 90.0 | 89.5 | 89.1 |
| 527 | 73.9 | 72.2 | 90.0 | 89.5 | 89.1 |
| 526 | 74.0 | 72.4 | 90.0 | 89.4 | 89.0 |
| 525 | 74.2 | 72.5 | 90.0 | 89.4 | 89.0 |
| 524 | 74.3 | 72.7 | 90.0 | 89.4 | 89.0 |
| 523 | 74.5 | 72.8 | 90.0 | 89.4 | 88.9 |
| 522 | 74.6 | 72.9 | 90.0 | 89.4 | 88.9 |
| 521 | 74.7 | 73.0 | 90.0 | 89.3 | 88.9 |
| 520 | 74.9 | 73.2 | 90.0 | 89.3 | 88.9 |
| 519 | 75.0 | 73.3 | 90.0 | 89.3 | 88.8 |
| 518 | 75.2 | 73.5 | 89.9 | 89.3 | 88.8 |
| 517 | 75.3 | 73.6 | 89.9 | 89.2 | 88.7 |
| 516 | 75.5 | 73.8 | 89.9 | 89.2 | 88.7 |
| 515 | 75.6 | 73.9 | 89.9 | 89.2 | 88.7 |
| 514 | 75.8 | 74.1 | 89.9 | 89.2 | 88.6 |
| 513 | 75.9 | 74.2 | 89.9 | 89.1 | 88.6 |
| 512 | 76.1 | 74.4 | 89.8 | 89.1 | 88.5 |
| 511 | 76.2 | 74.5 | 89.8 | 89.1 | 88.5 |
| 510 | 76.4 | 74.7 | 89.8 | 89.0 | 88.4 |
| 509 | 76.5 | 74.8 | 89.8 | 89.0 | 88.3 |
| 508 | 76.7 | 75.0 | 89.8 | 89.0 | 88.3 |
| 507 | 76.8 | 75.1 | 89.8 | 88.9 | 88.2 |
| 506 | 76.9 | 75.3 | 89.8 | 88.8 | 88.1 |
| 505 | 77.0 | 75.4 | 89.8 | 88.8 | 88.0 |
| 504 | 77.1 | 75.5 | 89.7 | 88.7 | 87.9 |
| 503 | 77.2 | 75.6 | 89.7 | 88.6 | 87.7 |
| 502 | 77.3 | 75.7 | 89.7 | 88.5 | 87.6 |
| 501 | 77.4 | 75.8 | 89.6 | 88.4 | 87.4 |

**Table 8**

| | Example 1 | Example 2 | Example 3 | Example 4 | Example 5 |
|---|---|---|---|---|---|
| (3-b)/(4-b) Compound | 4 ppm | 4 ppm | 1 ppm | 3 ppm | 5 ppm |
| Plast Blue 8514 | 15 ppm | 15 ppm | - | - | - |
| Plast Red 8320 | 3 ppm | 5 ppm | - | - | - |

| Measurement Wavelength (nm) | Transmittance (T%) | | | | |
|---|---|---|---|---|---|
| 500 | 77.4 | 75.8 | 89.6 | 88.3 | 87.3 |
| 499 | 77.5 | 75.9 | 89.6 | 88.2 | 87.1 |
| 498 | 77.5 | 75.9 | 89.5 | 88.1 | 86.8 |
| 497 | 77.5 | 75.9 | 89.4 | 87.9 | 86.6 |
| 496 | 77.4 | 75.9 | 89.4 | 87.7 | 86.3 |
| 495 | 77.4 | 75.9 | 89.3 | 87.5 | 86.0 |
| 494 | 77.3 | 75.8 | 89.2 | 87.3 | 85.6 |
| 493 | 77.2 | 75.7 | 89.2 | 87.1 | 85.3 |
| 492 | 77.1 | 75.6 | 89.1 | 86.9 | 84.9 |
| 491 | 76.9 | 75.5 | 89.0 | 86.6 | 84.4 |
| 490 | 76.7 | 75.3 | 88.9 | 86.3 | 83.9 |
| 489 | 76.5 | 75.0 | 88.8 | 85.9 | 83.4 |
| 488 | 76.2 | 74.8 | 88.6 | 85.6 | 82.8 |
| 487 | 75.9 | 74.5 | 88.5 | 85.2 | 82.2 |
| 486 | 75.5 | 74.1 | 88.4 | 84.7 | 81.5 |
| 485 | 75.1 | 73.8 | 88.2 | 84.3 | 80.8 |
| 484 | 74.7 | 73.3 | 88.0 | 83.8 | 80.1 |
| 483 | 74.2 | 72.9 | 87.8 | 83.3 | 79.3 |
| 482 | 73.7 | 72.4 | 87.6 | 82.8 | 78.4 |
| 481 | 73.2 | 71.9 | 87.5 | 82.2 | 77.6 |
| 480 | 72.7 | 71.4 | 87.3 | 81.6 | 76.6 |
| 479 | 72.1 | 70.7 | 87.0 | 81.0 | 75.6 |
| 478 | 71.5 | 70.1 | 86.8 | 80.3 | 74.7 |
| 477 | 70.8 | 69.5 | 86.6 | 79.7 | 73.7 |
| 476 | 70.2 | 68.9 | 86.4 | 79.1 | 72.8 |
| 475 | 69.6 | 68.3 | 86.1 | 78.5 | 71.9 |
| 474 | 69.0 | 67.7 | 85.9 | 77.9 | 71.0 |
| 473 | 68.4 | 67.1 | 85.7 | 77.3 | 70.1 |
| 472 | 67.8 | 66.5 | 85.5 | 76.7 | 69.2 |
| 471 | 67.3 | 65.9 | 85.3 | 76.2 | 68.4 |
| 470 | 66.7 | 65.4 | 85.1 | 75.6 | 67.6 |
| 469 | 66.2 | 64.9 | 84.9 | 75.1 | 66.8 |
| 468 | 65.8 | 64.4 | 84.7 | 74.6 | 66.1 |
| 467 | 65.3 | 64.0 | 84.5 | 74.2 | 65.5 |
| 466 | 65.0 | 63.6 | 84.4 | 73.8 | 64.9 |
| 465 | 64.6 | 63.4 | 84.2 | 73.5 | 64.4 |
| 464 | 64.4 | 63.1 | 84.1 | 73.2 | 64.0 |
| 463 | 64.1 | 62.9 | 84.1 | 72.9 | 63.6 |
| 462 | 64.0 | 62.8 | 84.0 | 72.7 | 63.3 |
| 461 | 63.9 | 62.8 | 83.9 | 72.6 | 63.2 |
| 460 | 63.8 | 62.9 | 83.9 | 72.5 | 63.0 |
| 459 | 63.9 | 63.0 | 83.9 | 72.5 | 63.0 |
| 458 | 64.0 | 63.2 | 83.9 | 72.6 | 63.1 |
| 457 | 64.2 | 63.5 | 83.9 | 72.7 | 63.3 |
| 456 | 64.4 | 63.9 | 84.0 | 72.9 | 63.6 |
| 455 | 64.8 | 64.3 | 84.1 | 73.2 | 64.0 |
| 454 | 65.2 | 64.8 | 84.2 | 73.5 | 64.5 |
| 453 | 65.7 | 65.4 | 84.4 | 73.9 | 65.1 |
| 452 | 66.3 | 66.0 | 84.5 | 74.4 | 65.8 |
| 451 | 67.0 | 66.6 | 84.7 | 74.9 | 66.5 |

**Table 9**

| | Example 1 | Example 2 | Example 3 | Example 4 | Example 5 |
|---|---|---|---|---|---|
| (3-b)/(4-b) Compound | 4 ppm | 4 ppm | 1 ppm | 3 ppm | 5 ppm |
| Plast Blue 8514 | 15 ppm | 15 ppm | - | - | - |
| Plast Red 8320 | 3 ppm | 5 ppm | - | - | - |

| Measurement Wavelength (nm) | Transmittance (T%) | | | | |
|---|---|---|---|---|---|
| 450 | 67.7 | 67.3 | 84.9 | 75.4 | 67.3 |
| 449 | 68.4 | 68.0 | 85.1 | 76.0 | 68.2 |
| 448 | 69.1 | 68.7 | 85.3 | 76.6 | 69.1 |
| 447 | 69.9 | 69.3 | 85.6 | 77.3 | 70.0 |
| 446 | 70.7 | 70.0 | 85.8 | 77.9 | 71.0 |
| 445 | 71.4 | 70.5 | 86.0 | 78.4 | 71.8 |
| 444 | 72.2 | 71.0 | 86.2 | 79.0 | 72.7 |
| 443 | 72.9 | 71.5 | 86.4 | 79.6 | 73.6 |
| 442 | 73.6 | 71.8 | 86.6 | 80.2 | 74.5 |
| 441 | 74.2 | 72.0 | 86.8 | 80.7 | 45.3 |
| 440 | 74.9 | 72.1 | 86.9 | 81.2 | 76.1 |
| 439 | 75.5 | 72.1 | 87.1 | 81.7 | 76.9 |
| 438 | 76.0 | 71.9 | 87.2 | 82.1 | 77.5 |
| 437 | 76.5 | 71.5 | 87.3 | 82.5 | 78.2 |
| 436 | 77.0 | 71.0 | 87.4 | 82.9 | 78.7 |
| 435 | 77.4 | 70.2 | 87.5 | 83.2 | 79.3 |
| 434 | 77.8 | 69.2 | 87.6 | 83.5 | 79.8 |
| 433 | 78.1 | 67.9 | 87.6 | 83.7 | 80.2 |
| 432 | 78.4 | 66.2 | 87.7 | 84.0 | 80.7 |
| 431 | 78.7 | 64.2 | 87.7 | 84.2 | 81.0 |
| 430 | 78.9 | 61.9 | 87.7 | 84.4 | 81.4 |
| 429 | 79.1 | 59.1 | 87.7 | 84.5 | 81.6 |
| 428 | 79.2 | 56.0 | 87.6 | 84.6 | 81.8 |
| 427 | 79.3 | 52.2 | 87.5 | 84.6 | 82.0 |
| 426 | 79.3 | 48.2 | 87.4 | 84.6 | 82.1 |
| 425 | 79.3 | 43.8 | 87.2 | 84.6 | 82.2 |
| 424 | 79.2 | 39.1 | 87.0 | 84.5 | 82.2 |
| 423 | 79.0 | 34.2 | 86.8 | 84.3 | 82.2 |
| 422 | 78.8 | 29.1 | 86.4 | 84.0 | 82.0 |
| 421 | 78.5 | 24.1 | 86.0 | 83.7 | 81.8 |
| 420 | 78.0 | 19.4 | 85.4 | 83.2 | 81.4 |
| 419 | 77.5 | 14.8 | 84.7 | 82.6 | 80.8 |
| 418 | 76.8 | 10.8 | 83.9 | 81.8 | 80.1 |
| 417 | 75.9 | 7.5 | 82.9 | 80.8 | 79.3 |
| 416 | 74.8 | 4.8 | 81.6 | 79.5 | 78.1 |
| 415 | 73.5 | 3.0 | 80.1 | 78.1 | 76.8 |
| 414 | 71.8 | 1.7 | 78.2 | 76.2 | 75.1 |
| 413 | 69.8 | 0.9 | 75.9 | 74.0 | 72.9 |
| 412 | 67.4 | 0.4 | 73.3 | 71.4 | 70.5 |
| 411 | 64.6 | 0.2 | 70.2 | 68.3 | 67.5 |
| 410 | 61.4 | 0.1 | 66.5 | 64.6 | 63.9 |
| 409 | 57.6 | 0.0 | 62.3 | 60.4 | 59.8 |
| 408 | 53.3 | 0.0 | 57.4 | 55.6 | 55.2 |
| 407 | 48.3 | 0.0 | 52.0 | 50.1 | 49.9 |
| 406 | 42.8 | 0.0 | 46.0 | 44.2 | 44.1 |
| 405 | 36.9 | 0.0 | 39.7 | 38.0 | 38.0 |
| 404 | 31.1 | 0.0 | 33.4 | 31.8 | 31.9 |
| 403 | 25.4 | 0.0 | 26.9 | 25.5 | 25.6 |
| 402 | 19.8 | 0.0 | 20.8 | 19.5 | 19.7 |
| 401 | 14.6 | 0.0 | 15.2 | 14.1 | 14.3 |

**Table 10**

| | Example 1 | Example 2 | Example 3 | Example 4 | Example 5 |
|---|---|---|---|---|---|
| (3-b)/(4-b) Compound | 4 ppm | 4 ppm | 1 ppm | 3 ppm | 5 ppm |
| Plast Blue 8514 | 15 ppm | 15 ppm | - | - | - |
| Plast Red 8320 | 3 ppm | 5 ppm | - | - | - |

| Measurement Wavelength (nm) | Transmittance (T%) | | | | |
|---|---|---|---|---|---|
| 400 | 10.2 | 0.0 | 10.5 | 9.6 | 9.8 |
| 399 | 6.5 | 0.0 | 6.8 | 6.1 | 6.3 |
| 398 | 3.7 | 0.0 | 4.0 | 3.7 | 3.8 |
| 397 | 1.9 | 0.0 | 1.9 | 2.0 | 1.8 |
| 396 | 0.9 | 0.0 | 0.9 | 0.8 | 0.8 |
| 395 | 0.4 | 0.0 | 0.4 | 0.3 | 0.3 |
| 394 | 0.1 | 0.0 | 0.1 | 0.1 | 0.1 |
| 393 | 0.1 | 0.0 | 0.1 | 0.0 | 0.0 |
| 392 | 0.0 | 0.0 | 0.0 | 0.0 | 0.0 |
| 391 | 0.0 | 0.0 | 0.0 | 0.0 | 0.0 |
| 390 | 0.0 | 0.0 | 0.0 | 0.0 | 0.0 |
| 389 | 0.0 | 0.0 | 0.0 | 0.0 | 0.0 |
| 388 | 0.0 | 0.0 | 0.0 | 0.0 | 0.0 |
| 387 | 0.0 | 0.0 | 0.0 | 0.0 | 0.0 |
| 386 | 0.0 | 0.0 | 0.0 | 0.0 | 0.0 |
| 385 | 0.0 | 0.0 | 0.0 | 0.0 | 0.0 |
| 384 | 0.0 | 0.0 | 0.0 | 0.0 | 0.0 |
| 383 | 0.0 | 0.0 | 0.0 | 0.0 | 0.0 |
| 382 | 0.0 | 0.0 | 0.0 | 0.0 | 0.0 |
| 381 | 0.0 | 0.0 | 0.0 | 0.0 | 0.0 |
| 380 | 0.0 | 0.0 | 0.0 | 0.0 | 0.0 |
| 379 | 0.0 | 0.0 | 0.0 | 0.0 | 0.0 |
| 378 | 0.0 | 0.0 | 0.0 | 0.0 | 0.0 |
| 377 | 0.0 | 0.0 | 0.0 | 0.0 | 0.0 |
| 376 | 0.0 | 0.0 | 0.0 | 0.0 | 0.0 |
| 375 | 0.0 | 0.0 | 0.0 | 0.0 | 0.0 |
| 374 | 0.0 | 0.0 | 0.0 | 0.0 | 0.0 |
| 373 | 0.0 | 0.0 | 0.0 | 0.0 | 0.0 |
| 372 | 0.0 | 0.0 | 0.0 | 0.0 | 0.0 |
| 371 | 0.0 | 0.0 | 0.0 | 0.0 | 0.0 |
| 370 | 0.0 | 0.0 | 0.0 | 0.0 | 0.0 |
| 369 | 0.0 | 0.0 | 0.0 | 0.0 | 0.0 |
| 368 | 0.0 | 0.0 | 0.0 | 0.0 | 0.0 |
| 367 | 0.0 | 0.0 | 0.0 | 0.0 | 0.0 |
| 366 | 0.0 | 0.0 | 0.0 | 0.0 | 0.0 |
| 365 | 0.0 | 0.0 | 0.0 | 0.0 | 0.0 |
| 364 | -0.1 | 0.0 | 0.0 | 0.0 | -0.1 |
| 363 | 0.0 | 0.0 | 0.0 | -0.1 | 0.0 |
| 362 | 0.0 | 0.0 | 0.0 | -0.1 | 0.0 |
| 361 | 0.0 | 0.0 | 0.0 | 0.0 | 0.0 |
| 360 | 0.0 | 0.0 | 0.0 | 0.0 | 0.0 |
| 359 | -0.1 | -0.1 | 0.0 | 0.0 | -0.1 |
| 358 | -0.1 | 0.0 | 0.0 | 0.0 | 0.0 |
| 357 | 0.0 | 0.0 | 0.0 | 0.0 | -0.1 |
| 356 | 0.0 | 0.0 | 0.0 | 0.0 | 0.0 |
| 355 | -0.1 | 0.0 | 0.0 | 0.0 | 0.0 |
| 354 | 0.0 | -0.1 | 0.0 | 0.0 | 0.0 |
| 353 | 0.0 | 0.0 | 0.0 | 0.0 | 0.0 |
| 352 | 0.0 | 0.0 | 0.0 | -0.1 | 0.0 |
| 351 | 0.0 | 0.0 | 0.0 | -0.1 | 0.0 |
| 350 | 0.0 | 0.0 | 0.0 | 0.0 | 0.0 |

The disclosures of Japanese Patent Application No. 2019-144875 filed on August 6, 2019, are incorporated herein by reference in their entirety.

All documents, patent applications, and technical standards described herein are incorporated by reference herein to the same extent as if the individual documents, patent applications, and technical standards were specifically and individually described.

## Claims

1. An optical material for which the following (1) to (3) are satisfied by a transmittance curve in a case in which the optical material is measured at a thickness of 2 mm, and for which a^{∗} is from -4 to 1 and b^{∗} is from -1 to 11 as a hue in a CIE 1976 (L^{∗}, a^{∗}, b^{∗}) color space:
(1) the transmittance curve has a maximum value T1 of transmittance at a wavelength of from 400 nm to 445 nm, and the maximum value T1 is 65% or more;
(2) the transmittance curve has a minimum value T2 of transmittance at a wavelength of from 445 nm to 485 m, and the minimum value T2 is from 60% to 90%; and
(3) a minimum value of transmittance at a wavelength of from 650 nm to 800 nm is 75% or more, and an average value of transmittance at a wavelength of from 650 nm to 800 nm is 80% or more.

2. The optical material according to claim 1, wherein a yellowness is from -2 to 13.

3. The optical material according to claim 1 or claim 2, wherein luminous transmittance is 75% or more.

4. The optical material according to any one of claim 1 to claim 3, comprising a resin material and an organic dye that includes at least one porphyrin-based compound represented by the following Formula A: 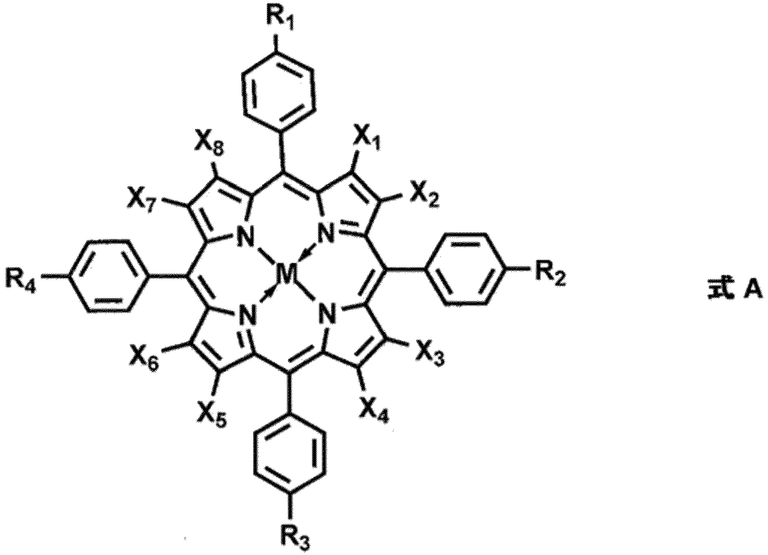 wherein, in Formula A, each of X₁ to X₈ independently represents a hydrogen atom or a halogen atom, at least one of X₁ to X₈ being a halogen atom, each of R₁ to R₄ independently represents a hydrogen atom or a straight chain or branched alkyl group, and M represents two hydrogen atoms, a divalent metal atom, a trivalent substituted metal atom, a tetravalent substituted metal atom, a hydroxylated metal atom or an oxidized metal atom.

5. The optical material according to claim 4, wherein a content of the organic dye is from 1 ppm to 6 ppm.

6. The optical material according to claim 4 or claim 5, wherein a content of the organic dye is from 1 ppm to 4 ppm.

7. The optical material according to any one of claim 4 to claim 6, wherein:
the organic dye comprises an organic dye *a* that is a porphyrin-based compound represented by Formula A, and an organic dye *b* that is a porphyrin-based compound represented by Formula A; and
in an absorption spectrum in a case in which the optical material is measured at an optical path length of 10 mm using a chloroform solution having a concentration of 0.01 g/L, the organic dye *a* has an absorption peak at from 445 nm to 455 nm, and the organic dye *b* has an absorption peak at from 460 nm to 470 nm.

8. The optical material according to claim 7, wherein a ratio of a content of the organic dye *b* to a content of the organic dye *a* is from 0.5 to 2.

9. The optical material according to any one of claim 1 to claim 8, wherein the transmittance curve has the minimum value T2 at a wavelength of from 455 nm to 465 m.

10. The optical material according to any one of claim 1 to claim 9, wherein the following (4) is satisfied by the transmittance curve:
(4) the transmittance curve has a minimum value T4 of transmittance at a wavelength of from 540 nm to 620 nm, and the minimum value T4 is 65% or more.

11. The optical material according to any one of claim 1 to claim 10, wherein:
the following (4) is satisfied by the transmittance curve:
(4) the transmittance curve has a minimum value T4 of transmittance at a wavelength of from 540 nm to 620 nm, and the minimum value T4 is 65% or more; and
the maximum value T1, the minimum value T4, and the minimum value T2 satisfy the maximum value T1>the minimum value T4>the minimum value T2.

12. The optical material according to any one of claim 1 to claim 11, wherein the following (5) is satisfied by the transmittance curve:
(5) the transmittance curve has a maximum value T5 of transmittance at a wavelength of from 485 nm to 540 nm, and the maximum value T5 is 70% or more.

13. The optical material according to any one of claim 1 to claim 12, wherein:
the following (4) and (5) are satisfied by the transmittance curve:
(4) the transmittance curve has a minimum value T4 of transmittance at a wavelength of from 540 nm to 620 nm, and the minimum value T4 is 65% or more;
(5) the transmittance curve has a maximum value T5 of transmittance at a wavelength of from 485 nm to 540 nm, and the maximum value T5 is 70% or more; and
the maximum value T5, the minimum value T4, and the minimum value T2 satisfy the maximum value T5>the minimum value T4>the minimum value T2.
